# EUROPEAN PATENT APPLICATION

(11) **EP 1 414 137 A1**
(43) Date of publication of application: **28.04.2004**
(21) Application number: 02751809.1
(22) Date of filing: 30.07.2002
(51) Int. Cl.: H02K 15/06

(54) **MOTOR PRODUCTION METHOD AND COIL INSERTION APPARATUS**

(30) Priority: 31.07.2001 JP 2001232571
(71) Applicant: AISIN AW CO., LTD., Anjo-shi Aichi 444-1192 (JP)
(72) Inventor: HASHIMOTO, Shingo, c/o AISIN AW CO., LTD., Anjo-shi, Aichi 444-1192 (JP); KUROYANAGI, Tooru, c/o AISIN AW CO., LTD., Anjo-shi, Aichi 444-1192 (JP); YAMAGUCHI, Tsuyoshi, c/o AISIN AW CO., LTD., Anjo-shi, Aichi 444-1192 (JP); KIDO, Takahiro, AISIN AW CO., LTD., Anjo-shi, Aichi 444-1192 (JP)
(74) Representative: Leson, Thomas Johannes Alois, Dipl.-Ing.
(86) International application number: PCT/JP2002/007749
(87) International publication number: WO 2003/012961

(57) **Abstract**

A method for manufacturing a motor has a stator in which coils are inserted into slots provided in an inner peripheral surface of a ring-shaped motor core. This motor manufacturing method includes a coil formation step for forming a unipolar coil having coil inserting portions inserted into the slots in two places, and coil end portions disposed on an outer portion of the motor core in two places such that they connect with the coil inserting portions; and a coil insertion step for holding the unipolar coil with a coil holding mechanism during or after the coil formation step, with the coil holding mechanism disposed on an inner portion of the motor core, and disposing the unipolar coil such that it is substantially parallel to the axial direction of the motor core, with the coil inserting portions opposing respective inner peripheral opening portions of the slots, and moving the unipolar coil substantially linearly toward the motor core so that the unipolar coil while detaching it from the coil holding mechanism to insert the coil inserting portions of the unipolar coil into the slots.

## Description

### TECHNICAL FIELD

The present invention relates to a motor manufacturing method, and more particularly to an insertion method of a coil into a motor core.

### BACKGROUND ART

When manufacturing of a motor with a stator formed from coils inserted into slots of a motor core such as a stator core, a rotor core or the like, an insertion method for that coil is very important. Conventionally, various coil insertion methods and insertion apparatuses have been proposed.

Conventional coil insertion methods mainly consist of so-called inserter methods such as disclosed in, for example, Japanese Patent Laid-Open Publication No. 2000-125522, Japanese Patent Laid-Open Publication No. 2000-116078, Japanese Patent Laid-Open Publication No. 9-322492 and the like.

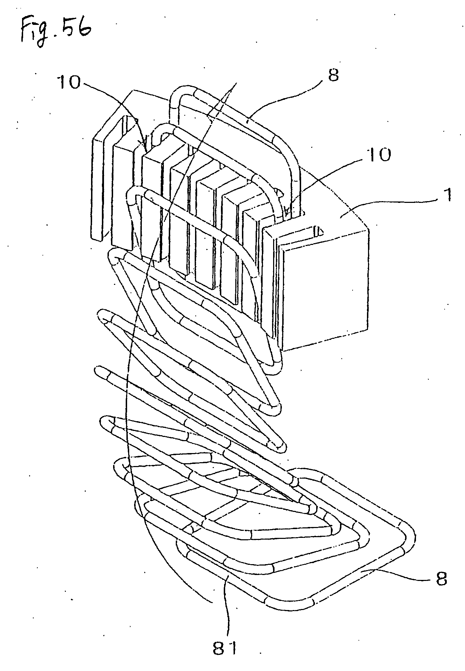

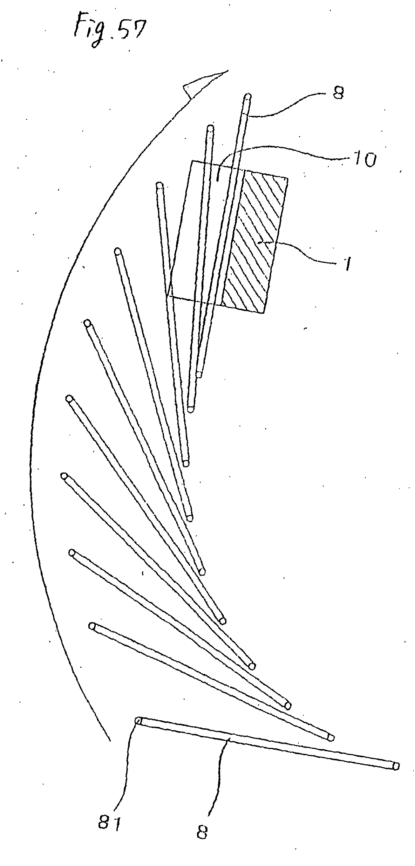

An example of this conventional inserter method will be described briefly. As shown in Figs. 56 and 57, a ring-shaped stator core 1 is placed horizontally and a coil 8 is also placed substantially horizontally downward of an axial direction thereof. Then, a jig (not shown) is raised from below the coil 8 into the inside of the stator core 1 and an inner end 81 of the coil 8 is hooked by the jig and moved upward. Consequently, the coil 8 is moved to gradually change from a horizontal state to a vertical state such that it rubs the inner peripheral surface of the stator core 1, and is inserted into slots 10 of the stator core 1.

However, the motor manufacturing method using the above conventional inserter method has the following problems.

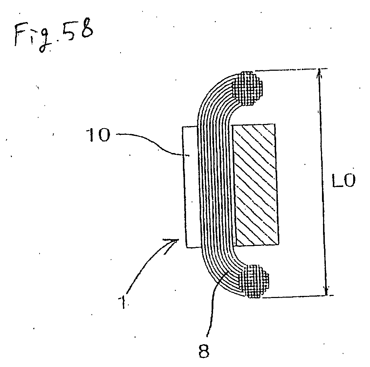

Namely, in the conventional inserter method, the coil 8 is inserted into the slots 10 of the stator core 1 while changing the state of the coil 8 as described above, therefore, a state occurs in which the coil 8 is inserted obliquely en route. Thus, as shown in Fig. 58, the dimension of the coil 8 needs to have at least an allowance of a length L0 in a vertical direction thereof. As a result, when the insertion is completed, a coil end portion of a top end portion or a bottom end portion of the coil 8 protrudes from the stator core 1 more than is necessary.

This greater than necessary protrusion of the coil end portion of the coil 8 leads to enlargement of all parts assembling the coil in the stator coil, and further, a dimension of the entire motor in the axial direction. This problem is the same when the motor core into which the coil is inserted is a stator core as described above, and when it is a rotor core.

In recent years, the applications of electric motors in automobiles, hybrid systems, and the like have been aggressively studied, and shortening motor dimensions in the axial direction has been strongly demanded.

The present invention has been achieved in view of the foregoing problems, and it is an object of the present invention to provide a motor manufacturing method in which the amount of protrusion of the coil from the stator core can be reduced, and the motor length in the axial direction can be shortened.

### DISCLOSURE OF THE INVENTION

According to a first aspect of the present invention, a motor manufacturing method has a stator formed by inserting coils into slots provided in an inner peripheral surface of a ring-shaped motor core, the motor manufacturing method characterized by including:
a coil formation step for forming a unipolar coil including coil inserting portions inserted into the slots in two places, and coil end portions disposed in an outer portion of the motor core in two places so as to connect with the coil inserting portions; and
a coil insertion step for holding the unipolar coil with a coil holding mechanism during or after the coil formation step, disposing the unipolar coil so as to be substantially parallel to the axial direction of the motor core, with the coil inserting portions opposing an inner peripheral opening portion in the respective slots, and moving the unipolar coil substantially linearly toward the motor core so as to detach from the coil holding mechanism to insert the coil inserting portions of the unipolar coil into the slots.

In the coil insertion step, first, each unipolar coil is disposed such that the coil inserting portion is substantially parallel to inner peripheral opening portion in the respective slots. Then, the unipolar coil is moved substantially linearly toward the motor core. Finally, the coil inserting portion of the unipolar coil is inserted into the slot.

Thus, in the coil insertion step, the coil can be inserted by its linear moving without greatly changing the orientation of the unipolar coil. Since the so-called linear inserting method can be carried out, the vertical length of the unipolar coil does not need to be made longer than required. Thus, the lengths of the coil inserting portion and the coil end portion of the unipolar coil can be set to optimum lengths for a state in which they are mounted on the motor core. Moreover, the length of a part in the axial direction formed by mounting the coil onto the motor core, and the entire motor length in the axial direction can be shortened.

According to a second aspect of the present invention, a motor manufacturing method has a stator formed by inserting coils into slots provided in an inner peripheral surface of a ring-shaped motor core, the motor manufacturing method characterized by including:
a coil formation step for forming a unipolar coil including coil inserting portions inserted into the slots in two places, and coil end portions disposed in an outer portion of the motor core in two places so as to connect with the coil inserting portions; and
a coil insertion step for disposing the unipolar coil so as to be substantially parallel to the axial direction of the motor core, with the coil inserting portions opposing an inner peripheral opening portion of the respective slots, and moving the unipolar coil substantially linearly toward the motor core by applying respective insertion pressure to at least two the coil inserting portions of the unipolar coil for inserting the coil inserting portions of the unipolar coil into the slots.

According to a third aspect of the present invention, a motor manufacturing method has a stator formed by inserting coils into slots provided in an inner peripheral surface of a ring-shaped motor core, the motor manufacturing method characterized by including:
a coil formation step for forming a unipolar coil including coil inserting portions inserted into the slots in two places, and coil end portions disposed in an outer portion of the motor core in two places so as to connect with the coil inserting portions; and
a coil insertion step for disposing the unipolar coil so as to be substantially parallel to the axial direction of the motor core, with the coil inserting portions opposing an inner peripheral opening portion of the respective slots, and moving the unipolar coil substantially linearly toward the motor core by applying respective insertion pressure to at least two the coil end portions of the unipolar coil for inserting the coil inserting portions of the unipolar coil into the slots.

According to a fourth aspect of the present invention, a motor manufacturing method has a stator formed by inserting coils into slots provided in an inner peripheral surface of a ring-shaped motor core, the motor manufacturing method characterized by including:
a coil formation step for forming a unipolar coil including coil inserting portions inserted into the slots in two places, and coil end portions disposed in an outer portion of the motor core in two places so as to connect with the coil inserting portions; and
a coil insertion step for disposing the unipolar coil so as to be substantially parallel to the axial direction of the motor core, with the coil inserting portions opposing an inner peripheral opening portion of the respective slots, and moving the unipolar coil substantially linearly toward the motor core by applying respective insertion pressure to a plurality of positions substantially symmetrical with respect to a winding center point of each the unipolar coil for inserting the coil inserting portions of the unipolar coil into the slots.

According to the second to fourth aspects of the present invention, the coil insertion step enables the coil to be inserted by its linear moving without greatly changing the orientation of the unipolar coil. Since the so-called linear inserting method can be carried out, the vertical length of the unipolar coil does not need to be made longer than required. Thus, the length of the coil inserting portion and the coil end portion of the unipolar coil can be set to optimum lengths for a state in which they are mounted on the motor core. Moreover, the length of a part in the axial direction formed by mounting the coil onto the motor core, and the entire motor length in the axial direction can be shortened.

According to a fifth aspect of the present invention, a coil insertion apparatus is provided using a coil holding mechanism provided with a coil holding groove at a position opposing a motor core, inserting a coil inserting portion of a unipolar coil inserted into the coil holding groove so the coil holding mechanism holds the unipolar coil, in order to insert the unipolar coil into a slot in the motor core from the coil holding mechanism, in a state where the motor core that is ring-shaped is disposed on an outer periphery side of the coil holding mechanism, the coil insertion apparatus characterized by including:
a base holding the coil holding mechanism and the motor core;
an insertion blade capable of being inserted into the coil holding groove in the coil holding mechanism; and
a blade driving mechanism for advancing and retracting the insertion blade along the coil holding groove.

Using this coil insertion apparatus enables the above-described method to be easily achieved.

### BRIEF DESCRIPTION OF THE DRAWINGS

Fig. 1 is an explanatory view showing a state in which a coil is wound around a spool with a winding arm according to a first embodiment;
Fig. 2 is an explanatory view showing a state in which formation of three coils is completed according to the first embodiment;
Fig. 3 is an explanatory view showing a state in which the shapes of the three coils are arranged according to the first embodiment;
Fig. 4 is an explanatory view showing a state just before a transfer device is inserted into a coil on the spool according to the first embodiment;
Fig. 5 is an explanatory view showing a state just after the transfer device is inserted into a coil on the spool according to the first embodiment;
Fig. 6 is an explanatory view showing a state in which the transfer device is inserted into a coil on the spool and clamps the coil according to the first embodiment;
Fig. 7 is an explanatory view showing a state in which the coil on the spool is pulled out by the transfer device according to the first embodiment;
Fig. 8 is an explanatory view showing a state in which the coil is transferred from the transfer device to a magazine according to the first embodiment;
Fig. 9 is an explanatory view showing a state in which the magazine is disposed in an inner portion of the stator core, and insertion blades and preliminary formation blades are inserted into grooves according to the first embodiment;
Fig. 10 is an explanatory view showing a state in which the insertion blades and the preliminary formation blades are being moved according to the first embodiment;
Fig. 11 is an explanatory view showing a state in which the moving of the insertion blades and the preliminary formation blades is completed according to the first embodiment;
Fig. 12 is an explanatory view showing a state in which upper and lower formers are advanced toward the stator core according to the first embodiment;
Fig. 13 is an explanatory view showing a state in which a coil trajectory is viewed obliquely when the coil is inserted into the stator core according to the first embodiment;
Fig. 14 is an explanatory view showing a state in which the coil trajectory is viewed laterally when the coil is inserted into the stator core according to the first embodiment;
Fig. 15 is an explanatory view showing a dimension of the coil inserted into the stator core according to the first embodiment;
Fig. 16 is an explanatory view showing the arrangement of unipolar coils for respective phases inserted into the stator core according to the first embodiment;
Fig. 17 is an explanatory view showing an overlapping state of the coil end portion of the unipolar coils for the respective phases inserted into the stator core according to the first embodiment;
Fig. 18 is an explanatory view showing the structure of a coil insertion apparatus according to a second embodiment;
Fig. 19 is an explanatory view showing motions of insertion blades and the like of the coil insertion apparatus according to the second embodiment;
Fig. 20 is an explanatory view showing the shape and motion of an insertion blade according to a third embodiment;
Fig. 21 is an explanatory view of the shape and motion of insertion blades as viewed from the side according to a fourth embodiment;
Fig. 22 is an explanatory view of the shape and motion of the insertion blades as viewed from above according to the fourth embodiment;
Fig. 23 is an explanatory view of the structure of a magazine as viewed from the front according to a fifth embodiment;
Fig. 24 is an explanatory view of the structure of the magazine as viewed from the side according to the fifth embodiment;
Fig. 25 is an explanatory view of the structure of the magazine as viewed from above according to the fifth embodiment;
Fig. 26 is an explanatory view of the structure of a magazine as viewed from the front according to a sixth embodiment;
Fig. 27 is an explanatory view of the structure of the magazine viewed from the side according to the sixth embodiment;
Fig. 28 is an explanatory view of the structure of the magazine as viewed from above according to the sixth embodiment;
Fig. 29 is an explanatory view showing application positions of the insertion pressure to be applied to the unipolar coil according to a seventh embodiment;
Fig. 30 is an explanatory view showing examples of application positions of the insertion pressure to be applied to the unipolar coil according to the seventh embodiment;
Fig. 31 is an explanatory view showing examples of application positions of the insertion pressure to be applied to the unipolar coil according to the seventh embodiment;
Fig. 32 is an explanatory view showing examples of application positions of the insertion pressure to be applied to the unipolar coil according to the seventh embodiment;
Fig. 33 is an explanatory view showing examples of application positions of the insertion pressure to be applied to the unipolar coil according to the seventh embodiment;
Fig. 34 is an explanatory view showing examples of application positions of the insertion pressure to be applied to the unipolar coil according to the seventh embodiment;
Fig. 35 is an explanatory view showing the structure of a divided insertion hook according to an eighth embodiment;
Fig. 36 is an explanatory view showing another structure of the divided insertion hook according to the eighth embodiment;
Fig. 37 is an explanatory view showing the structure of a coil forming apparatus according to a ninth embodiment;
Fig. 38 is an explanatory view showing a state in which a coil is being formed with the coil forming apparatus according to the ninth embodiment;
Fig. 39 is an exploded explanatory view showing the structure of a winding jig according to the ninth embodiment;
Fig. 40 is an explanatory view showing a state in which all spools of the winding jig are retracted according to the ninth embodiment;
Fig. 41 is an explanatory view showing a state in which a first spool of the winding jig is advanced according to the ninth embodiment;
Fig. 42 is an explanatory view showing a state in which wire is wound by rotating the winding jig around the axis of the first spool according to the ninth embodiment;
Fig. 43 is an explanatory view showing a state in which winding of wire around the first spool is completed according to the ninth embodiment;
Fig. 44 is an explanatory view showing a state in which the first spool is retracted according to the ninth embodiment;
Fig. 45 is an explanatory view showing a state in which a second spool of the winding jig is advanced according to the ninth embodiment;
Fig. 46 is an explanatory view showing a state in which winding of wire by rotating the winding jig around the axis of the second spool is completed according to the ninth embodiment;
Fig. 47 is an explanatory view showing a state in which the second spool is retracted according to the ninth embodiment;
Fig. 48 is an explanatory view showing a state in which a third spool of the winding jig is advanced according to the ninth embodiment;
Fig. 49 is an explanatory view showing a state in which winding of wire by rotating the winding jig around the axis of the third spool is completed according to the ninth embodiment;
Fig. 50 is an explanatory view showing a state in which the third spool is retracted according to the ninth embodiment;
Fig. 51 is an explanatory view showing the fixing structure at a spool retracted position according to the ninth embodiment;
Fig. 52 is an explanatory view showing a state in which engagement with a guide plate of a spool positioning pin is released according to the ninth embodiment;
Fig. 53 is an explanatory view showing the fixing structure at a spool advancing position according to the ninth embodiment;
Fig. 54 is an explanatory view showing a state in which the winding jig is disposed in an inner portion of the stator core according to the ninth embodiment;
Fig. 55 is an explanatory view showing a state in which an insertion blade inserted into the winding jig and a preliminary formation blade are advanced according to the ninth embodiment;
Fig. 56 is an explanatory view showing a trajectory of a coil when the coil is inserted into the stator core as viewed obliquely according to a conventional example;
Fig. 57 is an explanatory view showing a trajectory of the coil when the coil is inserted into the stator core as viewed laterally according to the conventional example; and
Fig. 58 is an explanatory view showing a dimension of a coil inserted into the stator coil according to the conventional example.

### BEST MODE FOR CARRYING OUT THE INVENTION

According to the first aspect of the present invention, it is preferable for moving of the aforementioned unipolar coil in the coil insertion step to be carried out with an angle formed between the coil inserting portion and the axial direction of the motor core maintained in a state less than 5 degrees. If the angle between the coil inserting portion and the axial direction of the motor core exceeds 5 degrees, there is concern that an effect reducing the length of the coil end portion may be lowered.

Also, in the coil insertion step, preferably, only the unipolar coil is inserted into the slots in the motor core. Namely, in a state where the coil is wound around a bobbin or the like, it is preferable for only the coil to be moved to the motor core, without moving the entire bobbin. Consequently, a distance between the motor core and each coil (unipolar coil) can be reduced, which is advantageous for the formation of a highly efficient magnetic circuit.

In addition, according to the second to fourth aspects of the present invention, in the coil insertion step, preferably, the unipolar coil is held by a coil holding mechanism during or after the coil formation step so that the coil inserting portion opposes inner peripheral opening portions of respective slots, and the unipolar coil is disposed such that it is substantially parallel to the axial direction of the motor core. Then, the coil inserting portion is moved substantially linearly toward a motor core so as to remove the unipolar coil from the coil holding mechanism. In this case as well, it is easy to mount only the unipolar coil on the motor core without the bobbin.

In addition, according to the first to fourth aspects of the present invention, preferably, the motor has the ring-shaped motor core provided with a plurality of slots in its inner peripheral surface and coil groups of plural phases; the coil group of each phase is constituted by a plurality of unipolar coils composing a single pole, and each unipolar coil is inserted in and disposed on the motor core such that it straddles two respective slots; and further, the unipolar coils belonging to coil groups of different phases mutually overlap on portions of the respective coil end portions in a state mounted on the motor core so as to form a distribution winding type motor. In this case, as described above, since portions of the coil end portions overlap each other, in particular, using a linear inserting method is extremely effective for constructing the coil end portion, which is a protruding portion of the coil, in a compact form.

In addition, it is preferable for the aforementioned motor core to be a stator core. Namely, the stator core and the rotor core are available as motor cores; however, particularly in the case of the stator core, the demand for making the length in the axial direction compact is strong, and for which the operation and effect of the present invention are extremely effective.

In addition, preferably, the coil insertion step uses a magazine as the coil holding mechanism having a disc shape capable of being disposed on an inner side of an inner peripheral surface of the motor core, which is provided with coil holding grooves positioned opposing the slot of the motor core on an outer peripheral surface thereof,
inserts the coil inserting portions of a plurality of the unipolar coils into the coil holding grooves so the coils are held by the magazine,
disposes the magazine in an inner portion of the motor core such that the coil holding groove of the magazine opposes the slot of the motor core, and
moves all the unipolar coils from the coil holding grooves to the slots in the motor core by contacting the coil inserting mechanism with all the unipolar coils on the magazine, and advancing a contact portion thereof in a direction from a center of the magazine toward an outer periphery.

Namely, first, the coil is inserted into the coil holding groove in the magazine. Here, the coil holding groove is provided on the outer peripheral surface of the magazine. Thus, when the coil is inserted into the coil holding groove, an apparatus having a flexible structure not restricted by space can be used and a flexible operation method can be adopted. Furthermore, the mounting of the coil into the coil holding groove in the magazine can be carried out with relative ease.

Then, the coil inserting mechanism is moved inward to contact the coil, and moved outward. Consequently, the coil held by the coil holding groove in the magazine is pushed linearly by the coil inserting mechanism so that it is pressed into an opposing slot in the motor core without any change in orientation. Namely, moving of the coil inserting mechanism enables linear motion of the coil to be executed easily.

Further, preferably, the coil inserting mechanism is composed of insertion blades capable of being inserted into the coil holding grooves in the magazine, and the coil inserting portion is moved from the coil holding groove to the slot in the motor core by inserting the insertion blade into the coil holding groove and advancing from the center toward the outer periphery.

Namely, when the coil is mounted on the magazine, a gap remains between the bottom portion of the coil holding groove and the coil. Consequently, the insertion blade can be disposed within the coil holding groove. Then, by inserting the insertion blade into the coil holding groove, the insertion blade can come into contact with the coil inserting portion located in the coil holding groove, so that stable moving of the coil can be realized. Further, insertion timing for inserting the insertion blade into the coil holding groove may be at the same time the magazine is disposed within the motor core, or at a period before or after that.

Further, preferably, the insertion blade is structured to be inserted from either the front or rear surface side of the magazine. Consequently, the insertion blade moving mechanism can be obtained easily.

Further, preferably, the coil inserting mechanism is composed of a pair of divided insertion blades capable of being inserted from respective front and rear surface sides of the magazine into the coil holding grooves, and the pair of divided insertion blades are inserted into the respective coil holding grooves from the front and rear surface sides of the magazine so that they make contact with the coil inserting portion, and by advancing that contact portion from the center to the outer periphery, the coil inserting portion is moved from the coil holding groove into the slots in the motor core. In this case, the pair of divided insertion blades inserted into the coil holding groove from the front and rear surface sides of the magazine can be moved from the center to the outer periphery, or as shown in an embodiment described below, it is possible to move the coil linearly by only vertically inserting the pair of divided insertion blades having a tapered portion.

Further, preferably, the coil inserting mechanism is composed of a pair of divided insertion hooks separated on the front and rear surface sides of the magazine, and makes contact with the respective coil end portions projected to the front and rear surface sides of the magazine; the pair of divided insertion hooks are advanced from the center of the magazine toward the outer periphery so as to move the coil inserting portion from the coil holding groove into the slot in the motor core.

In this case, it is not necessary for the coil inserting mechanism to be inserted into the coil holding groove, and the coil can be supported from the front and rear surface sides of the magazine easier and with more stability.

Further, preferably, a preliminary formation step for pressing and deforming the coil end portion by advancing a preliminary forming mechanism disposed between adjacent coil holding grooves from the center of the magazine toward the outer periphery at the same time or after the coil inserting portion is moved from the coil holding groove into the slot is executed.

In this case, the preliminary formation step in which the coil end portion that is a protruding portion from the coil is pushed outward and deformed each time the coil is mounted on the motor core can be carried out easily. Consequently, the coil end portion approaches the surface of the motor core so that the length in the axial direction of the coil end portion can be further reduced. In addition, since the preliminary formation can be conducted using the magazine and the preliminary forming mechanism, the apparatus and the step can be simplified.

Further, preferably, a preliminary forming groove is provided in the magazine in line with the coil holding groove, and as the preliminary forming mechanism, a preliminary formation blade capable of being inserted into the preliminary forming groove is employed in the preliminary formation step executed by inserting the preliminary formation blade into the preliminary forming groove and advancing it from the center toward the outer periphery.

In this case, the apparatus structure can be obtained easily by the combination of the preliminary forming groove and the preliminary formation blade.

Further, preferably, the preliminary forming mechanism is composed of a pair of divided preliminary formation blades separated on the front and rear surface sides of the magazine, and the preliminary formation step is executed by advancing the pair of divided preliminary formation blades from the center of the magazine to the outer periphery on the front and rear surface sides.

In this case, the preliminary formation can be stably executed from the front and rear sides of the coil.

Further, preferably, the coil inserting mechanism is composed of a pair of divided insertion blades separated on the front and rear surface sides of the magazine, and structured such that the divided insertion blades interlock with the divided preliminary formation blades.

Namely, if the coil inserting mechanism and the preliminary forming mechanism are divided on both front and rear surface sides of the magazine, it is preferable for the mechanisms present on the same surface side to be linked such that they interlock with each other. Consequently, the moving mechanisms for the coil inserting mechanism and the preliminary forming mechanism can be integrated, thereby enabling simplification of the apparatus structure.

Further, preferably, after the coil insertion step and the preliminary formation step are repeated multiple times, a main formation step that arranges the coil end portion by pressing formers, which have a forming face for arranging the coil end portion into a desired shape, against the motor core is executed.

In this case, the entire coil subjected to the preliminary forming can be finally formed into a desired shape by only pressing the former onto the motor core. Thus, the main formation step can be executed easily. Since the coil end portion protruding from the motor core can be formed so as to be nearer the motor core with this main formation step, the dimension in the axial direction can be further reduced.

Further, preferably, the former is provided with a notch portion for preventing interference between the coil inserting mechanism and the preliminary forming mechanism, and the former is pressed against the motor core while maintaining a state in which the coil inserting mechanism and the preliminary forming mechanism are advanced.

In this case, due to the presence of the coil inserting mechanism and the preliminary forming mechanism, the coil can be fixed during the coil main formation step, so that the main formation step can be stably executed. Further, since the main formation step can be conducted continuously after the preliminary formation step is completed, the manufacturing process can be further streamlined.

Further, preferably, the motor is a 3-phase DC brushless motor, and in the coil insertion step, unipolar coils corresponding to a phase are simultaneously inserted into the slots in the motor core.

In this case, coils corresponding to a phase can all be handled at one time using the magazine. By shifting relative positions of the magazine and motor core, all three phases can be accommodated so that the insertion operation of the coils into the motor core can be completed through repeating the operation three times.

Further, as the magazine, the winding jig for use in the coil formation step can be used.

Namely, the coil formation step can use a winding jig having a base holder and a plurality of spools provided radially on an outer peripheral surface of the base holder, in which spools are disposed retractably with respect to the base holder, and include
a spool projection step for advancing such that one spool among the plurality of spools projects more than other spools;
a winding step for supplying wire to the projected spool from a single direction, and forms a unipolar coil by rotating the entire winding jig around an axis of the spool to wind the wire around the spool;
a spool retraction step for retracting the spool on which the unipolar coil is formed, wherein
the spool projection step, the winding step, and the spool retraction step are sequentially executed repeatedly for adjacent spools, with a rotation direction of the winding jig is sequentially reversed in the winding step; and
the winding jig is used as the magazine in the coil insertion step, and the winding jig holding the coil is disposed in an inner portion of the motor core, with each unipolar coil moved directly from the spool into the slot in the motor core.

In this case, in the above coil formation step, the coil is formed with the winding jig having a plurality of spools provided radially. In the coil insertion step, this winding jig is disposed in an inner portion of the motor core. At this time, since the spools possessed by the winding jig are disposed radially as described above, when the winding jig is disposed within the ring-shaped motor core, each unipolar coil can easily be made to oppose an insertion slot. Thus, the unipolar coil can be moved directly from the spool into the slot in the motor core, without transferring it from the winding jig to another transfer device or the like.

Further, in the coil formation step, the winding jig with the unique structure having the base holder and the spool is used. As described above, the spool projection step, the winding step, and the spool retraction step are conducted for each spool in that order.

The winding step is conducted by rotating the entire winding jig around the axis of the projected spool. Thus, wire can be supplied from a single direction as described above, thereby eliminating the necessity of conventionally turning the wire itself. Moreover, the unipolar coil can be formed around the spool without twisting the wire.

Further, the winding step is conducted after the spool projection step, and after the winding step, the spool retraction step is conducted. Namely, when changing the spool undergoing the winding step, the spool can be changed by advancing or retracting the spool in the spool projection step or the spool retraction step, thereby eliminating the need to specially provide a space between adjacent spools for supplying wire. Moreover, the length of the crossover wire obtained between the unipolar coils can be kept sufficiently short.

Further, preferably, the base holder of the winding jig is disc-shaped and the plurality of spools are disposed retractably along the axes extending radially from the center point of the base holder. In this case, when changing the rotation center for rotating the winding jig for each spool in the coil formation step, the entire winding jig need only be rotated slightly around the center point of the base holder. Thus, the operation of changing the rotation center when the spool subjected to winding is changed is facilitated.

Further, preferably, each of the spools has a fan shape, the width of which spreads along the axis. In this case, the shape of the unipolar coil formed on each spool can be of a shape with a width expanding along the axis. Thus, it is possible to easily obtain a coil shape suitable for mounting it from the inner peripheral surface of the motor core.

Further, preferably, each of the spools has a detachable forming block for arranging the shape of the wound unipolar coil. In this case, using a forming block with a different shape enables the shape of the unipolar coil to be changed easily. This forming block can exert its function as the above-described positioning device.

Further, preferably, when all the spools of the winding jig are retracted, a visible outline formed by ends of the respective spools is circular with its center as the center point of the base holder. In this case, when the winding jig is disposed on the side of an inner surface of the ring-shaped motor core, the gap between the winding jig and the inner surface of the motor core can be reduced, thereby allowing smoother moving of the coil.

Further, preferably, a separation plate extending from the outer peripheral surface of the base holder is disposed on both sides of each of the spools, and a predetermined gap is maintained between the separation plate and the spool. In this case, when the spool is retracted after the unipolar coil is formed on the spool, the coil can be disposed in the space of the predetermined gap between the separation plate and the spool, so that the coil can be held on the winding jig in a condition where excellent coil shape is maintained.

Next, regarding the coil insertion apparatus according to the fifth aspect may be structured such that, preferably, the coil holding mechanism includes one or plural preliminary forming grooves provided between a pair of coil holding grooves for holding a unipolar coil; the coil insertion apparatus having one or plural preliminary formation blades capable of being inserted into the preliminary forming groove provided between a pair of insertion blades corresponding to the pair of coil holding grooves; and the blade driving mechanism advancing and retracting the preliminary formation blade interlockingly with the insertion blade along the preliminary forming groove. In this case, preliminary formation can be simultaneously conducted with the insertion of the unipolar coil.

Further, preferably, the coil insertion apparatus may be structured such that it includes a first arm and a second arm each having a swing supporting point at the bottom end, in which the insertion blade is connected to a top end of the first arm while a preliminary formation blade is connected to a top end of the second arm; the first arm and the second arm contain a first elongated hole portion and a second elongated hole portion having respective partial inclinations; a hoisting member lifted up and down by an actuator is disposed on an inner side the first arm and the second arm, in which the hoisting member has a first pin and a second pin slidably engaging the first elongated hole portion and the second elongated hole portion; and when the hoisting member is lifted up and down by the actuator, engagement positions between the first pin and the second pin and the first elongated hole portion and the second elongated hole portion respectively are changed so as to swing the first arm and the second arm, thereby advancing or retracting the insertion blade and the preliminary formation blade by this swinging. In this case, the advancing and retraction motion of the insertion blade and preliminary formation blade can be conducted easily with high precision.

### First Embodiment

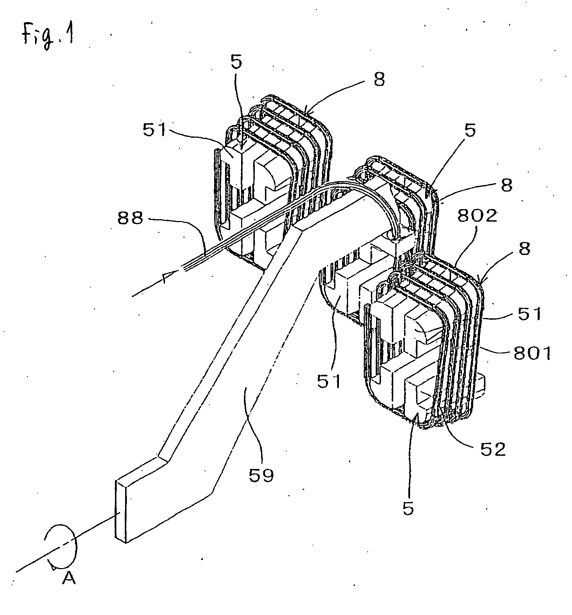

A motor manufacturing method according to an embodiment of the present invention will be described with reference to Figs. 1 to 15.

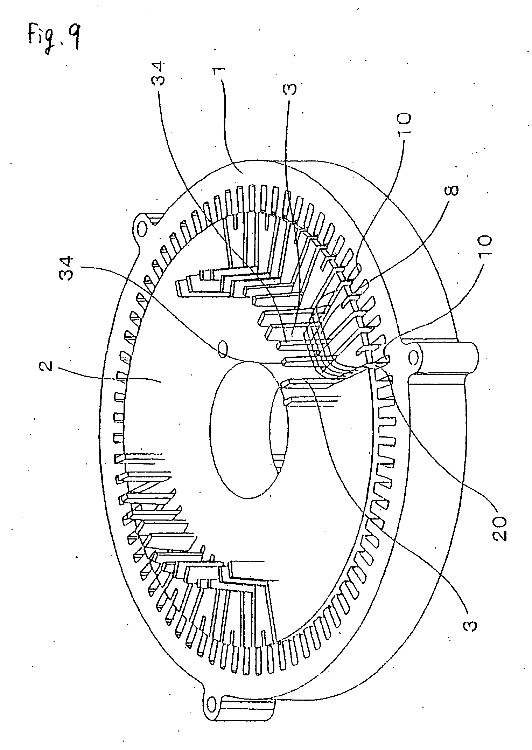

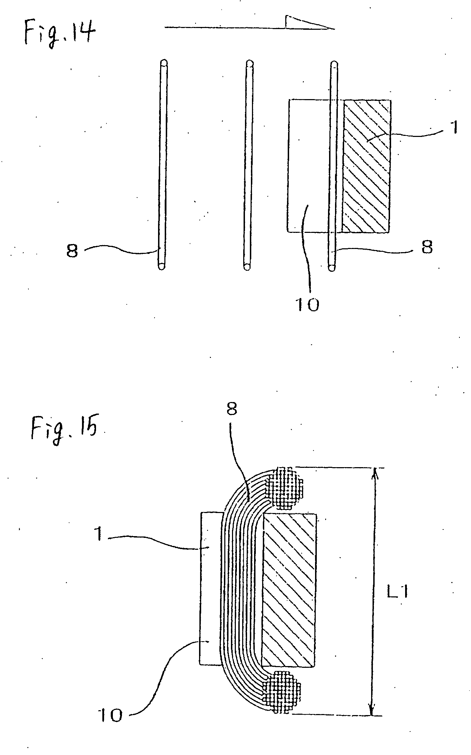

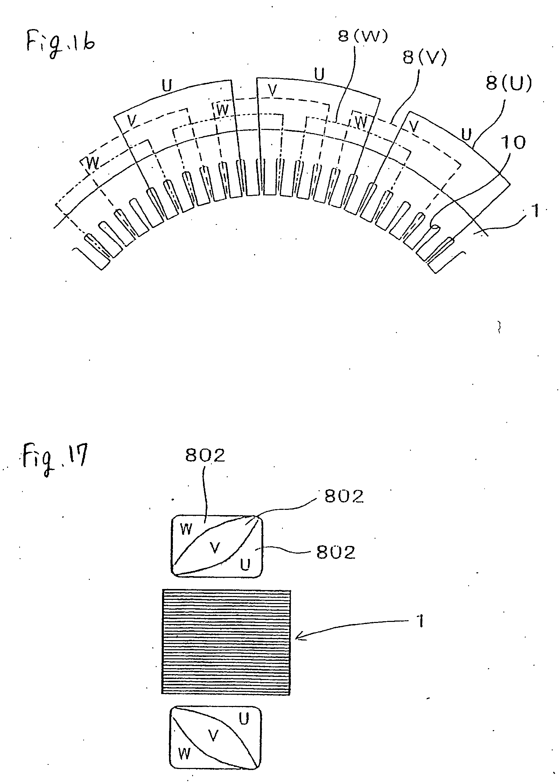

The motor manufacturing method of this embodiment includes a ring-shaped motor core (stator core) 1 (Figs. 9-12) provided with a plurality of slots 10 in an inner peripheral surface, and coil groups of three phases (phase U, phase V, phase W) (Figs. 16 and 17). In the method, the coil group of each phase is composed of a plurality of unipolar coils 8 constituting a pole, and each unipolar coil 8 is inserted in and disposed on the stator core 1 such that it straddles two respective slots 10. The unipolar coils 8 belonging to coil groups of different phases, a portion of coil end portions 802 mutually overlap in a state mounted on the stator core 1 core so as to form a motor.

The manufacturing method of this embodiment includes a coil formation step and a coil insertion step.

The coil formation step, as shown in Figs. 1-3, is a step for forming a coil including the unipolar coil 8 having coil inserting portions 801 that are inserted into the slots 10 in two places, and coil end portions 802 disposed on an outer portion of the stator core 1 such that they connect with the coil inserting portions 801 in two places.

In addition, the coil insertion step, as shown in Figs. 9-11, is a step for disposing a plurality of unipolar coils 8 such that the coil inserting portions 801 are substantially parallel to opening portions in the inner peripheral surface of the respective slots 10, and by simultaneously moving the plurality of unipolar coils 8 substantially linearly toward the stator core 1 in a state where an angle formed between the coil inserting portion and the axial direction of the stator core 1 is maintained at less than 5 degrees, the coil inserting portions 801 of the plurality of unipolar coils 8 are simultaneously inserted into the slots 10.

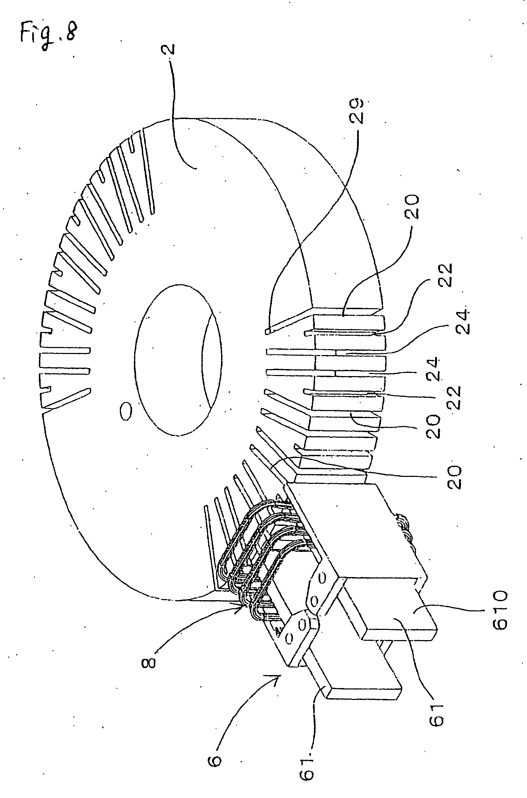

In the coil insertion step of this embodiment, as shown in Fig. 8, a magazine 2 is used having a disc shape which allows it to be disposed on an inner side of an inner peripheral surface of the stator core 1, and coil holding grooves 20 that are provided at positions opposing the slots 10 of the stator core 1 on an outer peripheral surface thereof.

Further, the coil 8 (coil inserting portion 801) is inserted into the coil holding groove 20, and the magazine 2 is disposed in an inner portion of the stator core 1 such that the coil holding grooves 20 in the magazine 2 oppose the slots 10 in the stator core 1.

Next, by advancing an insertion blade 3, which is a coil inserting mechanism, from the center of the magazine 2 toward the outer periphery such that it makes contact with the coil 8 as shown in Fig. 9, the coil 8 is moved from the coil holding groove 20 into the slot 10 in the stator core 1.

Hereinafter, this manufacturing process will be described in further detail.

A motor to be manufactured according to the present invention is a 3-phase DC brushless motor. The stator core 1 of this embodiment is produced by laminating ring-shaped electromagnetic steel plates, and as shown in Figs. 9-12 and 16, an inner peripheral surface thereof contains the slots 10 in a total of 72 places.

Here, an example of arrangement of the coils 8 on the respective slots 10 in the stator core 1 will be described briefly.

In the stator core 1 according to this embodiment, a total of 36 unipolar coils 8 are divided into three groups composed of 12 corresponding to a single phase.

If sequential numbers from 1 to 72 are assigned to each slot 10, first, with regard to the first group, one unipolar coil is inserted passing through the first slot and the sixth slot such that a ring is formed, and another unipolar coil is inserted adjacent to this coil passing through a seventh slot and a twelfth slot such that another ring is formed. Further, adjacent to this coil, unipolar coils are such disposed at every sixth slot. Consequently, as shown in Fig. 16, first, 12 unipolar coils 8, which are a coil group belonging to the phase U, are inserted in an inner peripheral surface of the stator core 1 in an adjacent state.

The unipolar coils 8 belonging to the second and third groups (phases V and W) are respectively disposed shifted by two slots and four slots in the circumferential direction from the first group arrangement state. Consequently, as shown in Fig. 16, in the stator core 1,a portion of the coil end portion 802 of the unipolar coil 8 belonging to the phase V overlaps the coil end portion 802 of the unipolar coil 8 belonging to the phase U from an inner portion of the stator core 1. Further, a portion of the coil end portion 802 of the unipolar coil 8 belonging to the phase W overlaps the coil end portion 802 of the unipolar coil 8 belonging to the phase V from an inner portion of the stator core 1, so that all the unipolar coils 8 are mounted on the stator core 1. Finally, as shown in Fig. 17, the coil end portions 802 of the respective phases are accommodated compactly in a state deformed outward from the slots 10 through a preliminary formation step and a main formation step, which will be described later.

In this embodiment, a group (for a phase), namely, 12 unipolar coils 8 are handled at one time using the magazine 2, and a total of 36 unipolar coils 8 are mounted onto the stator core 1 by repeating the operation three times.

As shown in Fig. 8, the magazine 2 of this embodiment includes a right and left pair of coil holding grooves 20, a right and left pair of auxiliary grooves 22 having a shallow depth located therebetween, and a right and left pair of preliminary forming grooves 24 further located therebetween. If these six grooves are assumed to be one group, then 12 groups are provided adjacent in the entire outer peripheral surface of the magazine 2. In addition, all the adjacent grooves are provided such that they oppose the slots 10 in the stator core 1 (partially omitted in Figs. 8-12).

Further, each auxiliary groove 22 is provided along the radial direction, and all grooves are oriented radially in different directions. Meanwhile, the coil holding groove 20 is provided paired and mutually parallel with the coil holding groove 20 disposed adjacent so as to enable the adjacent unipolar coil 8 to be inserted. Further, the pair of preliminary forming grooves 24 are provided mutually parallel.

Prior to the operation using the magazine 2 having such a structure, according to this embodiment, a winding step for forming the coil is executed. In this winding step, three unipolar coils 8 are formed at one time time.

Upon executing the winding step of this embodiment, as shown in Fig. 1, three spools 5 provided aligned and a winding arm 59 for supplying and winding wire (electric wire) 88 around the spool 5 are used.

As shown in the same figure, each spool 5 has four pawl portions 51 on the right, left, top and bottom, and notch portions 52 are provided in right and left side surfaces thereof to facilitate insertion of a transfer device 6, which will be described later. In addition, the pawl portions 51 are structured to open and close in the right and left directions, and when wounding wire, open in the right and left directions and expand their outer diameter. Also, each spool 5 is capable of entire advancing and retracting, and each spool 5 is further structured so as to swing in the right and left directions.

The winding arm 59 is structured such that it supplies wire 88 while rotating around the spool 5 in an advanced state. Further, it is structured such that its rotation direction can be changed.

First, the spool 5 on the left end is advanced more than others (not shown), and the winding arm 59 supplies wire 88 while rotating in the clockwise direction with the spool 5 on the left end as a center. Consequently, a first unipolar coil 8 is formed.

Next, the spool 5 on the left end is retracted while the spool 5 in the center is advanced (not shown). This time, the winding arm 59 supplies wire 88 while rotating in the counterclockwise direction with the spool 5 in the center as a center. Consequently, a second unipolar coil 8 is formed.

Further, as shown in Fig. 1, the central spool 5 is retracted while the spool 5 on the right end is advanced. This time, the winding arm 59 supplies wire 88 while again rotating in the clockwise direction (direction of arrow A) with the spool 5 on the right end as a center. Consequently, a third unipolar coil 8 is formed.

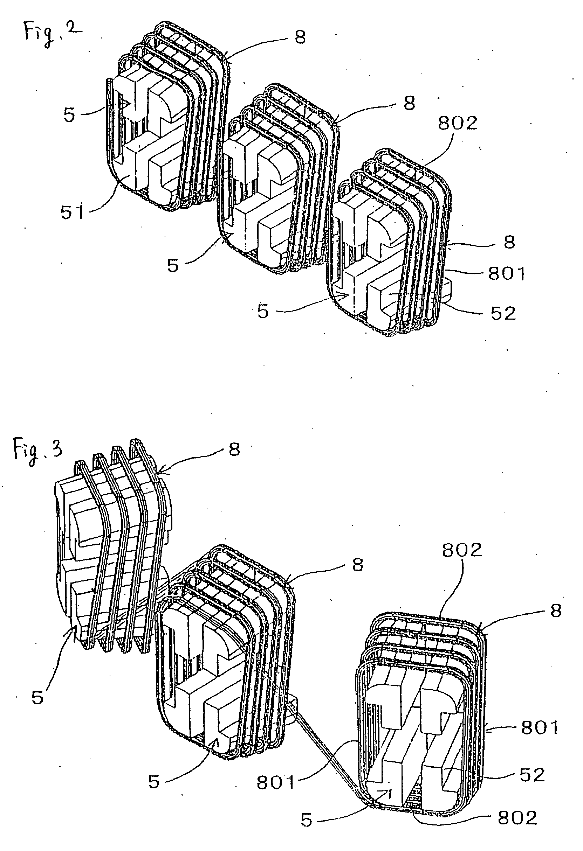

Next, as shown in Fig. 2, the spool 5 on the right end is retracted so that the above-described three spools 5 are aligned in a row. Next, as shown in Fig. 3, the spools 5 on the right and left are swung slightly to an outer side to apply tensile force to the three unipolar coils 8, thereby reforming the shapes of the coils.

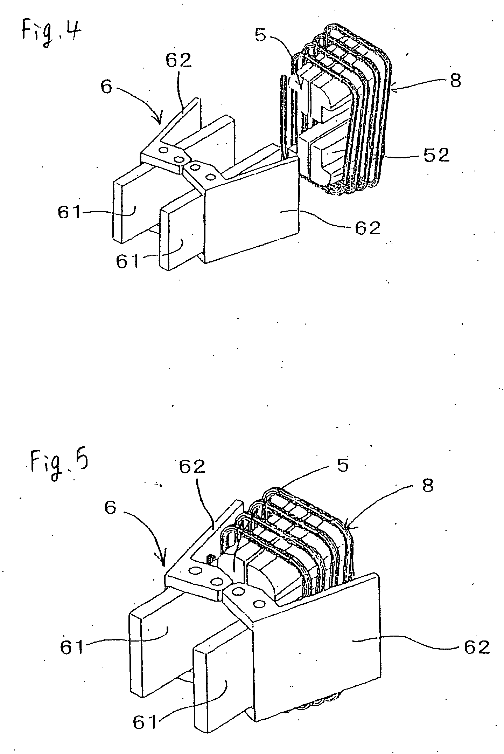

Next, according to this embodiment, as shown in Figs. 4 to 8, the three unipolar coils 8 formed on the three spools 5 are transferred to the magazine 2 from the spools 5 using the transfer device 6.

As shown in Figs. 4 to 7, the transfer device 6 includes two base plates 61 and clamp plates 62 respectively disposed outward thereof. The base plates 61 and the clamp plates 62 are provided capable of swinging in a horizontal direction and an opening and closing movement.

Upon actually transferring the coil using this transfer device 6, as shown in Fig. 4, first, the pawl portions 51 of the spool 5 are closed in the right and left directions so as to reduce the outside diameter thereof. Consequently, a gap is formed between the spool 5 and the unipolar coil 8 formed on the visible outline thereof.

Further, in the transfer device 6, the base plates 61 are positioned parallel corresponding to the gap between the spool 5 and the unipolar coil 8. In addition, the clamp plates 62 open end sides to the right and left so that gaps between the clamp plates 62 and the base plates 61 are opened.

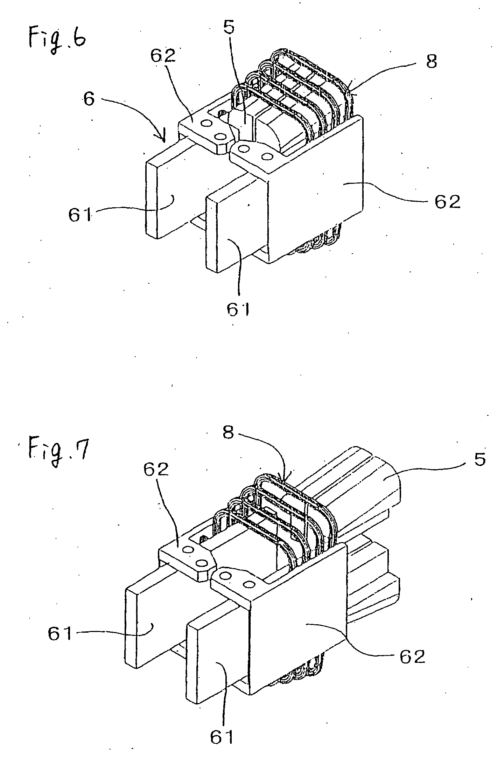

Next, as shown in Fig. 5, the base plate 61 of the transfer device 6 is inserted into a gap between the spool 5 and the unipolar coil 8. As shown in Fig. 6, the clamp plates 62 are closed so that the unipolar coil 8 is clamped between the clamp plate 62 and the base plate 61.

Then, by retracting the transfer device 6 as shown in Fig. 7, removal of the unipolar coil 8 from the spool 5 is completed.

Next, as shown in Fig. 8, the transfer device 6 is provided opposing the outer peripheral surface of the magazine 2 such that outer side faces 610 of the base plate 61 are substantially parallel to the inner side surfaces of the coil holding grooves 20. Then, the clamp plates 62 are opened slightly so that the unipolar coil 8 is movable. The unipolar coil 8 is pushed with a pusher (not shown), so that the unipolar coil 8 is transferred into the coil holding grooves 20 in the magazine 2. At this time, the unipolar coil 8 is not pressed to the bottom of the coil holding groove 20, and provides a gap between the unipolar coil 8 and a bottom portion 29 of the coil holding groove 20 into which the insertion blade 3 can be inserted, which will be described later.

By using three transfer devices 6 at the same time, three unipolar coils 8 can be formed on three spools 5 and transferred to the magazine 2 side at the same time. When each unipolar coil 8 may be separated, the respective unipolar coils 8 can naturally be transferred one by one using the transfer device 6.

By repeating the formation and transfer operation of three coils using the spools 5 four times as described above, 12 unipolar coils 8 are disposed on an outer peripheral surface of the magazine 2.

The operation from formation of the coil to transfer to the magazine 2 conducted in parallel with an increased number of spools 5, winding arms 59 and transfer devices 6, can streamline these processes.

Next, the coil is moved from the magazine 2 to the stator core 1.

First, as shown in Fig. 9, the magazine 2 is disposed in an inner portion of the stator core 1 such that the coil holding grooves 20 in the magazine 2 oppose the slots 10 in the stator core 1.

At this time, all unipolar coils 8 in the magazine 2 are disposed such that coil inserting portions 801 thereof are substantially parallel to respective corresponding slots 10. An angle formed between the coil inserting portion 801 and the slot 10 at this time is maintained at less than 5 degrees.

Further, the insertion blades 3 are inserted into the aforementioned gaps in the coil holding grooves 20 in the magazine 2. Also, the preliminary formation blades 34 are inserted into the preliminary forming grooves 24 in the magazine 2.

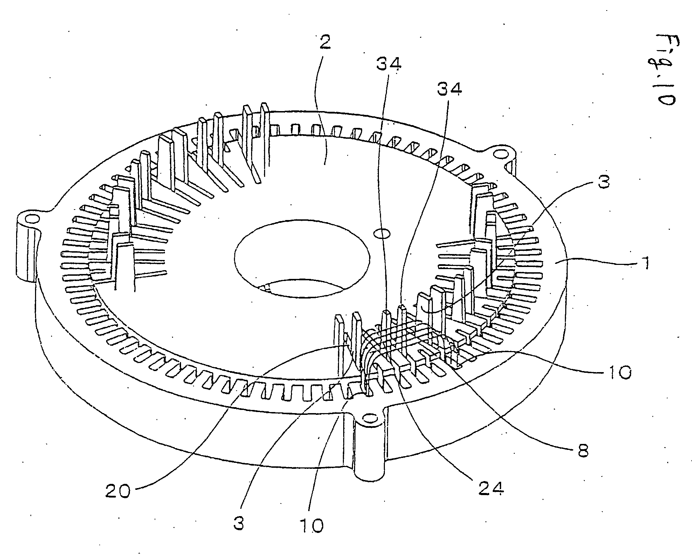

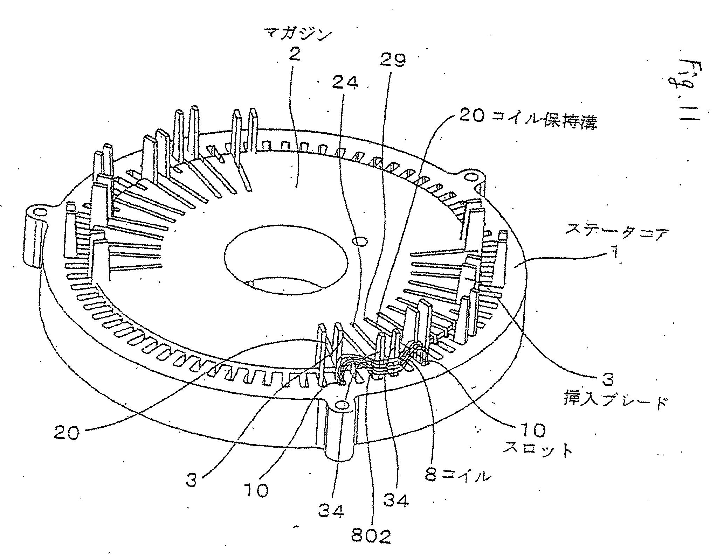

Then, as shown in Figs. 10 and 11, the insertion blades 3 are advanced within the coil holding grooves 20 from the center toward the outer periphery and at the same time, the preliminary formation blades 34 are advanced within the preliminary forming grooves 24 from the center toward the outer periphery. Consequently, the unipolar coil 8 is pushed by the insertion blades 3 so that it moves from the coil holding groove 20 to the slots 10 in the stator core 1.

In addition, the upper and lower coil end portions 802 of the unipolar coil 8 protruding from the stator core 1 are pushed by the preliminary formation blades 34 and subjected to preliminary forming so that they are deformed outward.

Such an advancement operation of the insertion blades 3 and the preliminary formation blades 34 is simultaneously carried out for all 12 unipolar coils 8, so that the 12 unipolar coils 8 of a single group are inserted into the slots 10 in the stator core 1 at the same time.

At this time, the angle formed between each coil inserting portion 801 and slot 10 is maintained at less than 5 degrees during movement. Therefore, all unipolar coils 8 are simultaneously moved substantially linearly to the stator core 1, and the coil inserting portions 801 of all unipolar coils 8 are inserted into the slots 10 at the same time.

Next, according to this embodiment, a second preliminary formation step is executed using a pair of upper and lower formers 66 as well for use in the main formation step.

As shown in Fig. 12, the former 66 has a ring shape and a forming face 660 for arranging the coil to a desired shape on a side opposing the stator core 1. More specifically, each of the upper and lower formers 66 has the forming face 660 with a tapered shape such that an inner peripheral portion thereof protrudes toward the stator core 1. Then, the formers 66 are structured such that by advancing the formers 66 toward the stator core 1, the coils 8 are formed outward along the tapered shape of the forming face 660.

Further, each former 66 is provided with notch portions 665 for preventing interference with the insertion blades 3 and the preliminary formation blades 34. The formers 66 can be pressed against the stator core 1 while the insertion blades 3 and the preliminary formation blades 34 maintain an advanced state.

The pair of upper and lower formers 66 having such a structure are respectively advanced toward the stator core 1 from above and below, and pressed against the stator core 1. Consequently, the coil end portion 802, protruding from above and below the stator core 1 of each of the 12 unipolar coils 8 disposed on the stator core 1 as described above, falls toward the stator core 1 such that a second preliminary forming is achieved.

Next, in this embodiment, the formation of the coil using the spool 5 and the winding arm 59 described above, and the transfer operation of the coil using the transfer device 6 are carried out so that a second group of 12 unipolar coils 8 are inserted in and disposed on the magazine 2.

Identical to the above description, the magazine 2 is disposed in an inner portion of the stator core 1 such that the coil holding grooves 20 in the magazine 2 oppose the slots 10 in the stator core 1. At this time, the magazine 2 and the stator core 1 are disposed at positions shifted relative to each other, such that the first phase coils of the first group described above are shifted from coils of the second group. Next, moving of the coil 8 using the insertion blade 3, and preliminary forming using the preliminary formation blade 34 are carried out.

Further, a second preliminary forming is executed using a pair of upper and lower formers 66 identical to the above description.

Next, 12 unipolar coils 8 of a third group are handled the same as the first and second groups. However, when moving the coil from the magazine 2 to the stator core 1, the positions of the magazine 2 and the stator core 1 are shifted relative to each other such that the third group (third phase) is shifted from the first group (first phase) and the second group (second phase).

Further, the second preliminary formation for the third group is accordingly, a main formation step. Namely, when the coils of the third group are inserted into the stator coil 1, all 36 unipolar coils 8 are in a mounted state on the stator core 1. The preliminary formation using the preliminary formation blade 34 is directly carried out for only the 12 unipolar coils 8 of the third group. Meanwhile, formation using the formers 66 as the second preliminary formation is executed for all 36 unipolar coils 8, and is a main formation step for arranging the entire coil shape.

As a result, a total of 36 unipolar coils 8 are inserted into the stator core 1, and the main formation is completed.

In this embodiment, the operation from formation of the 12 unipolar coils of each group to the second preliminary formation is carried out as a sequential operation. However, the operation from coil formation to insertion of the coils into the magazine 2 using three groups of the magazines 2 with three groups in parallel is naturally possible in order to streamline the operation.

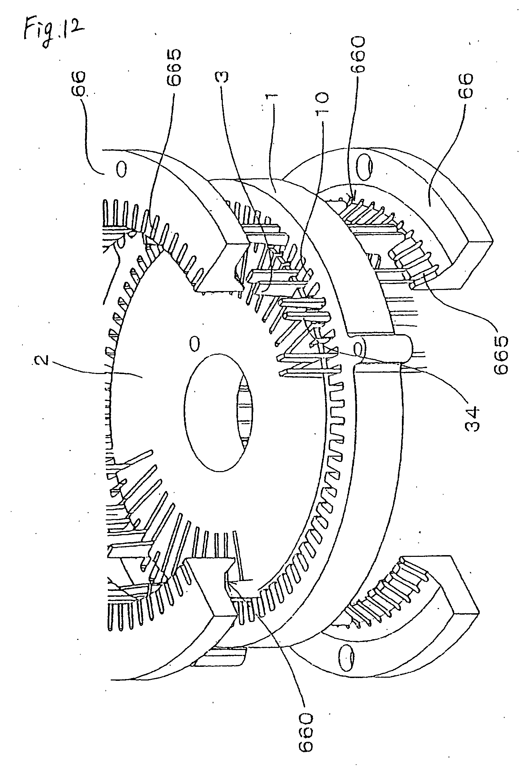

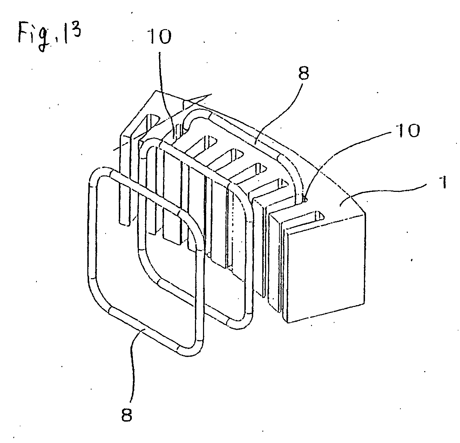

As described above, in this embodiment, a so-called linear inserting process can be executed easily and stably by using the magazine 2 and the insertion blade 3. Namely, as shown in Figs. 13 and 14, the coil 8 can be inserted into the slot 10 linearly without changing the orientation of the coil 8. Thus, it is not necessary to increase the vertical length of the coil 8 more than required. More specifically, as shown in Fig. 15, a dimension L1 in the vertical direction of the coil 8 inserted into the stator core 1 can be sufficiently shortened more than a conventional dimension L0 in the vertical direction shown in Fig. 58.

Consequently, an excessive protrusion of the coil 8 from the stator core 1 can be prevented, so that the length in the axial direction of a part produced by mounting the coil 8 on the stator core 1, and the length of the entire motor in the axial direction can be shortened.

Further, particularly in this embodiment, the preliminary forming grooves 24 are provided in the magazine 2, and preliminary formation is carried out by moving the preliminary formation blades 34. Consequently, each time the unipolar coil 8 is mounted on the stator core 1, the coil end portion 802 of the coil is pressed outward and deformed, thereby facilitating the preliminary formation. Further, this operation can be carried out at the same time the coil is transferred, thereby enabling simplification of the apparatus and process.

Further, according to this embodiment, the second preliminary formation and the main formation on the coil 2 are executed by pressing the formers 66 against the stator core 1. Consequently, the entire coil subjected to the preliminary formation can be arranged to a desired shape all at once, by only pressing the formers 66 against the stator core 1. Since the second preliminary formation and the main formation enable the coil end portion protruding from the stator core 1 to be arranged such that it becomes closer to the stator core 1, the aforementioned dimension in the axial direction can be reduced.

In addition, the former 66 is provided with the notch portion, thereby allowing the formers 66 to be pressed against the stator core 1 while maintaining the insertion blades 3 and the preliminary formation blades 34 in an advanced state. Thus, as described above, the second preliminary formation and the main formation can be carried out continuously subsequent to the insertion of the coil 8 into the stator core 1 and preliminary formation, thereby streamlining the manufacturing process.

In this embodiment, the insertion blade 3 is used as the coil inserting mechanism, while the preliminary formation blade 34 is used as the preliminary forming mechanism. However, divided insertion blades or divided insertion hooks, and divided preliminary formation blades or divided preliminary formation hooks that are separated on a front side and a rear side of the magazine 2 may be used instead. In this case, it is possible to integrate the divided insertion blades or divided insertion hooks, and divided preliminary formation blades or divided preliminary formation hooks, on the front and rear sides of the magazine 2, thereby enabling simplification of the apparatus.

Further, in this embodiment, an example with a 3-phase DC brushless motor was shown, however, the above-described method can also be applied to a motor of another structure.

### Second Embodiment

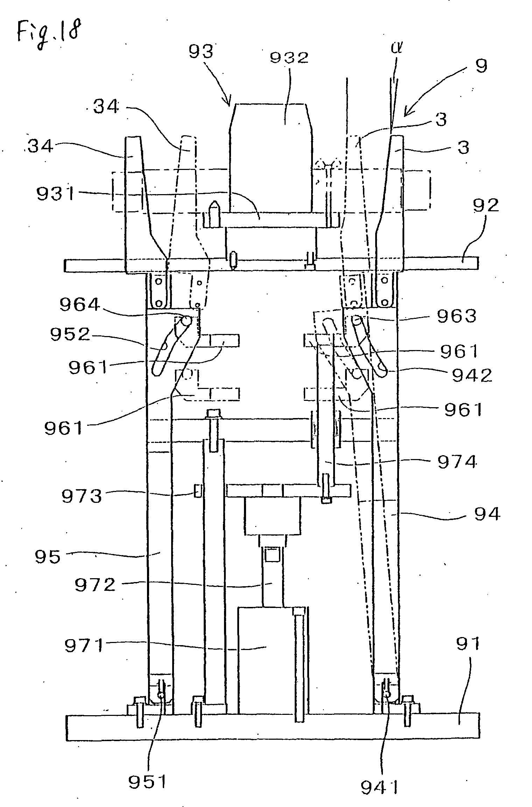

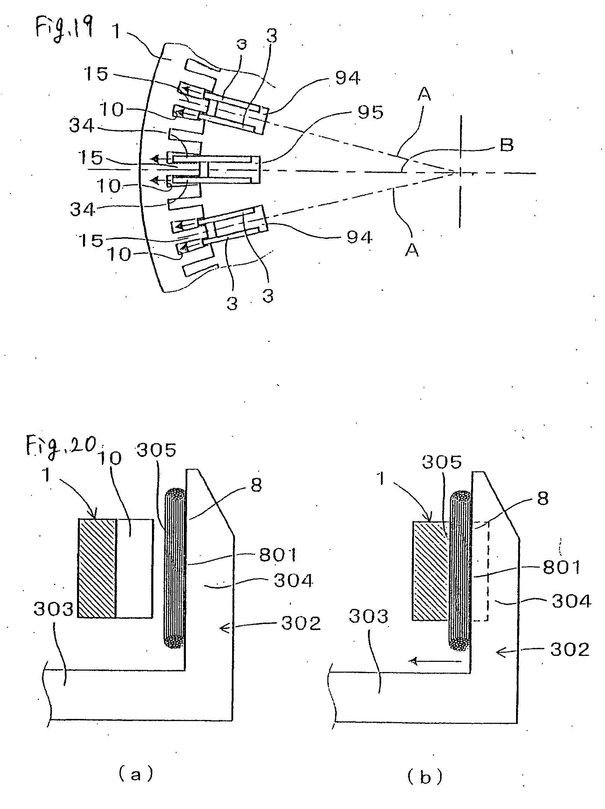

In this embodiment, as shown in Figs. 18 and 19, an example of the coil insertion apparatus for inserting the coil into the stator 1 from the magazine 2 of the first embodiment will be described in further detail.

A coil insertion apparatus 9 of this embodiment, as shown in Fig. 18, has an upper plate portion 92 fixed via a supporting column (not shown) provided extended from a bottom plate portion 91, and a magazine 2 cradle 93 is provided on an upper portion thereof for holding the magazine.

The magazine cradle 93 includes a flange portion 931, and a central protruding portion 932 having a cylindrical shape with a diameter smaller than the flange portion 931.

The bottom plate portion 91 has a plurality of first arms 94 disposed swingably with a fulcrum 941 as a center, and a plurality of second arms 95 disposed swingably with a fulcrum 951 as a center. As shown in the same figure, the first arm 94 has the insertion blade 3 on a top end thereof, while the second arm 95 has the preliminary formation blade 34 on a top end thereof.

The first arm 94 has an elongated hole portion 942 capable of engaging a pin 963 provided in a hoisting plate 961. In addition; as shown in the same figure, the second arm 95 has an elongated hole portion 952 capable of engaging a pin 964 provided in a second hoisting plate 962.

Further, the hoisting plate 961 is structured such that it is connected with a cylinder 971, a hoisting rod 972, a base plate 973, a connecting rod 974, and the like disposed on the bottom plate portion 91, and is lifted up and down with the rise and fall of the hoisting rod 972 driven by the cylinder 971.

Further, the elongated hole portions 942 and 952 provided in the first arm 94 and the second arm 95 have inclined elongated hole portions. By moving the pins 963 and 964 in the vertical direction, engaging positions between the pins 963 and 964 and the elongated hole portions 942 and 952 shift from each other, whereby the first arm 94 and the second arm 95 are structured so as to swing with the fulcrums 941 and 951 as centers. The shapes of the elongated hole portion 942 in the first arm 94 and the elongated hole portion 952 in the second arm 95 are changed slightly, so that the swing amount or the like of the first arm 94 and the second arm 95 are different.

In addition, as shown in Fig. 19, each first arm 94 is provided with two parallel insertion blades 3, and the two insertion blades 3 are structured so as to move parallel together with the swing direction of the first arm 94. The swing direction of all first arms 94 is a direction along a radial direction A passing through the center of a tooth 15 located between two slots 10 in the stator 1.

Likewise, each second arm 95 is provided with two parallel preliminary formation blades 34, and the two preliminary formation blades 34 are structured so as to move parallel together with the swing direction of the second arm 95. The swing direction of all second arms 95 is a direction along a radial direction B passing through the center of the tooth 15 located between two slots 10 in the stator 1.

A noteworthy point of this coil insertion apparatus 9, as shown in Fig. 18, is an angle of inclination α with respect to the vertical direction at a swing startup position of the insertion blade 3 is set to less than 5 degrees, and an angle of inclination with respect to the vertical direction at a swing end position is set to 0 degrees.

Thus, when the coil is moved from the magazine 2 to the stator 1 using the coil insertion apparatus 9, all unipolar coils 8 can be simultaneously moved substantially linearly toward the stator core 1, with an angle formed between the coil inserting portion 801 in contact with the insertion blade 3 and the slot 10 in the stator 1 always maintained in a state less than 5 degrees.

Other characteristics are the same as the description of the first embodiment.

### Third Embodiment

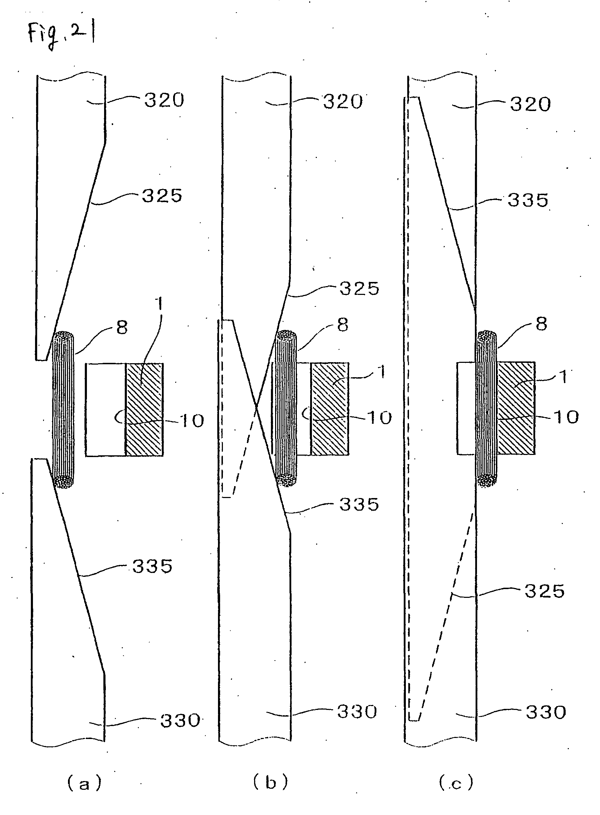

This embodiment, as shown in Fig. 20, is an example showing another example of the above-described insertion blade.

Namely, as shown in the same figure, an insertion blade 302 of this embodiment has a substantially L-shaped, and is composed of base portion 303 extending in the horizontal direction and a vertical blade portion 304 extending in the vertical direction. Also, a contact face 305 of the vertical base portion 304 is provided as a vertical plane. By moving the base portion 303 in the horizontal direction, the vertical blade 304 is structured so as to advance or retract while maintaining the vertical state of the contact portion 305.

If this insertion blade 302 is used, as shown in Fig. 20(a), the angle formed between the coil inserting portion 801 and the slot 10 can be maintained at substantially 0 when in contact with the coil inserting portion 801, as well as when insertion into the slot 10 in the stator core 1 is completed.

### Fourth Embodiment

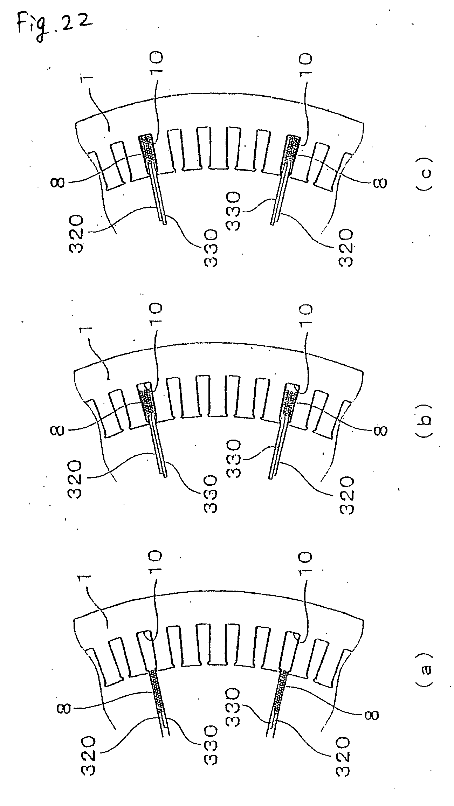

This embodiment is an example using a pair of upper and lower divided insertion blades 320 and 330 as the insertion blade, as shown in Figs. 21 and 22.

Namely, the divided insertion blades 320 and 330 of this embodiment, as shown in Fig. 21, are a pair of upper and lower strips having tapered portions 325 and 335 on the sides of ends thereof, in which the ends are provided mutually opposing.

An operation of the divided insertion blades 320 and 330 for moving the coil 8 will be described briefly with reference to Figs. 21 and 22. Fig. 21 shows the motion of the divided insertion blades 320 and 330 and the unipolar coil 8 viewed from the radial direction of the stator core 1. Fig. 22 is an explanatory view showing the width dimensions of the portions in contact with the coil 8 of the divided insertion blades 320 and 330, which correspond to each operation of Fig. 21, as viewed from the axial direction of the stator core 1.

As shown in Figs. 21 and 22, the divided insertion blades 320 and 330 approach each other and overlap in the progression from (a) to (c). The width dimension of the contact portion with the unipolar coil 8 increases gradually along the tapered portions 325 and 335 so that the unipolar coil 8 is pressed gradually into the slot 10 in the stator core 1.

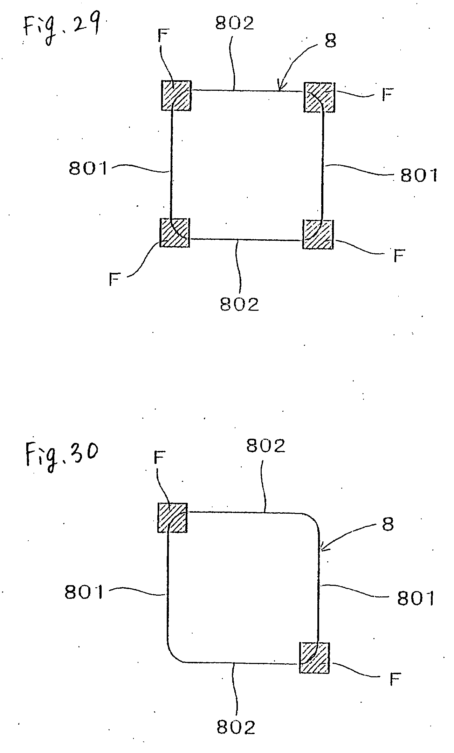

An insertion pressure applied to the unipolar coil 8 is applied to four positions substantially symmetrical with respect to a winding center point of the unipolar coil 8 as shown in Fig. 29, which will be described later. Consequently, after reaching a state in which it is disposed substantially parallel to the slot 10, the unipolar coil 8 can be moved linearly while substantially maintaining that orientation.

### Fifth Embodiment

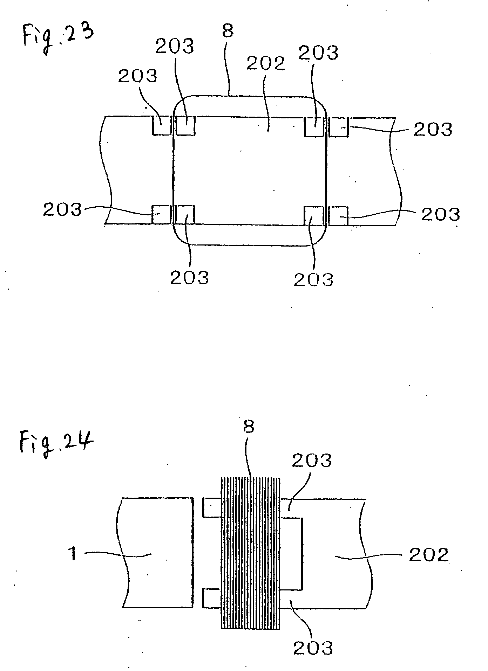

This embodiment, as shown in Figs. 23-25, is an example employing a magazine 202 having a different structure from the magazine of the first embodiment.

The magazine 202 of this embodiment has a supporting rod portion 203 for forming a coil holding groove to hold the unipolar coil 8. In this case as well, a coil insertion step identical to the first embodiment can be carried out by a plurality of unipolar coils 8 held as shown in Figs. 23 and 24.

### Sixth Embodiment

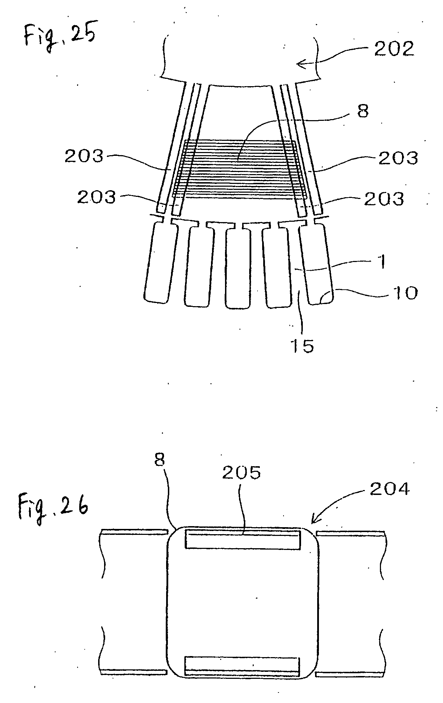

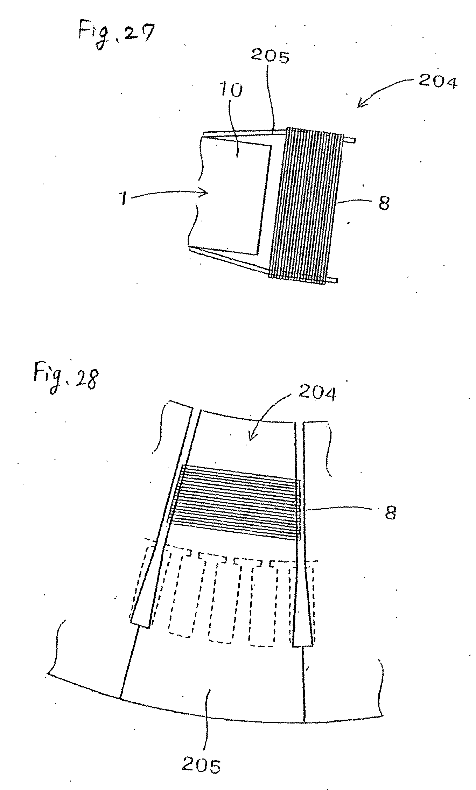

This embodiment is an example employing a magazine 204 having a different structure from the magazine of the first embodiment as shown in Figs. 26 to 28.

The magazine 204 of this embodiment has a pair of upper and lower magazine plates 205 extending from the outer radial direction to an inner peripheral surface for each pole.

In this case, as shown in Figs. 26 to 28, the unipolar coil 8 for a pole is held on a magazine plate 205 of the magazine 204, and mounted vertically in the axial direction of the stator core 1. Then, the unipolar coil 8 is moved into the slot 10 by pressing with an insertion blade or the like. Thereafter, the coil insertion step can be executed by the operation of pulling the magazine plate 205 holding each unipolar coil 8 one pole at a time, or a plurality of poles simultaneously in an outer radial direction.

### Seventh Embodiment

As shown in Figs. 29 to 34, this embodiment shows examples of positions on the unipolar coil 8 to which an insertion pressure is applied in the coil insertion step.

Fig. 29 is an example in which the insertion pressure is applied to a plurality of positions substantially symmetrical with respect to the winding center point of the unipolar coil 8, namely, pressure receiving regions F on four comers that are border portions between the coil inserting portion 801 and the coil end portion 802 of the unipolar coil 8.

Fig. 30 is an example in which the insertion pressure is applied to a plurality of positions substantially symmetrical with respect to the winding center point of the unipolar coil 8, namely, the pressure receiving regions F on two comers of the four comers that are border portions between the coil inserting portion 801 and the coil end portion 802 of the unipolar coil 8.

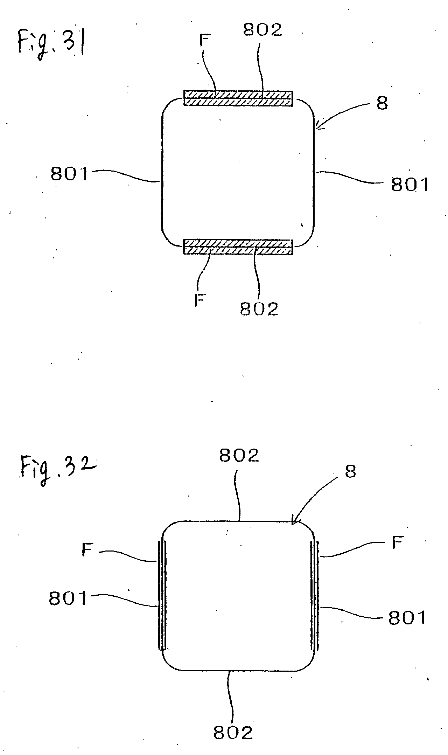

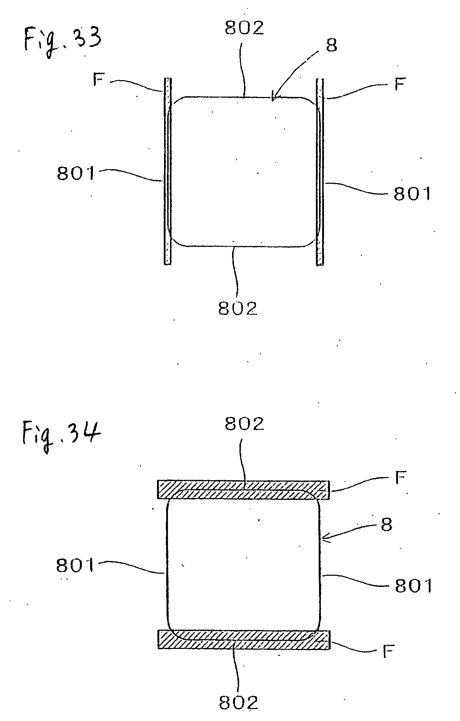

Figs. 31 and 34 are examples in which the insertion pressure is applied to the pressure receiving regions F on two coil end portions 802 of the unipolar coil 8.

Figs. 32 and 33 are examples in which the insertion pressure is applied to the pressure receiving regions F on two coil inserting portions 801 of the unipolar coil 8.

In any of the examples, the unipolar coil 8 can be moved linearly while an angle formed between the coil inserting portion 801 of the unipolar coil 8 and the slot 10 is maintained at less than 5 degrees. Moreover, the examples shown in Figs. 29 to 34 are mere examples, and the pressure receiving regions F, which are positions on which the insertion pressure is to be applied, can naturally be further changed.

### Eighth Embodiment

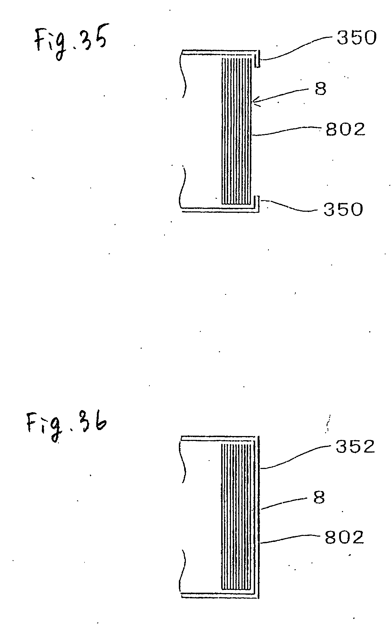

This embodiment is an example showing the divided insertion hook employed as the coil inserting mechanism instead of the insertion blade 3 of the first embodiment, as shown in Figs. 35 and 36.

Fig. 35 shows one divided insertion hook 350 of a pair of divided insertion hooks separated on the front and rear surface sides of the magazine. This divided insertion hook 350 has a shape with an L-shaped cross section for hooking both end portions of the coil end portion 801, and is structured such that the insertion pressure is applied to the pressure receiving regions F on the four comers as described above in Fig. 29.

Fig. 36 also shows one divided insertion hook 352 of a pair of divided insertion hooks separated on the front and rear surface sides of the magazine. This divided insertion hook 352 has a shape with a U-shaped cross section for hooking the entire coil end portions 801, and is structured such that the insertion pressure is applied as described above in Fig. 34.

Using these separation insertion hooks also enables a coil insertion step identical to the first embodiment to be carried out.

### Ninth Embodiment

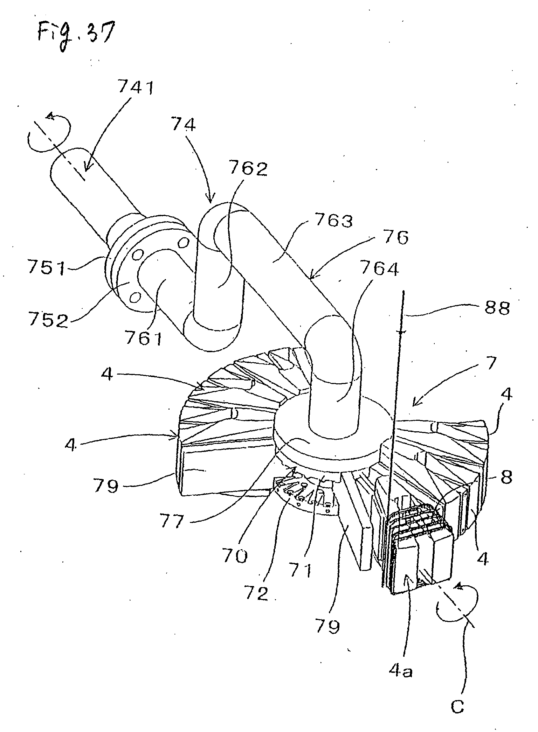

This embodiment is an example in which, as shown in Figs. 37 to 55, the coil formation step is carried out using a magazine (winding jig) 7 having a special structure that also functions as a winding jig for use in the coil formation step as the magazine.

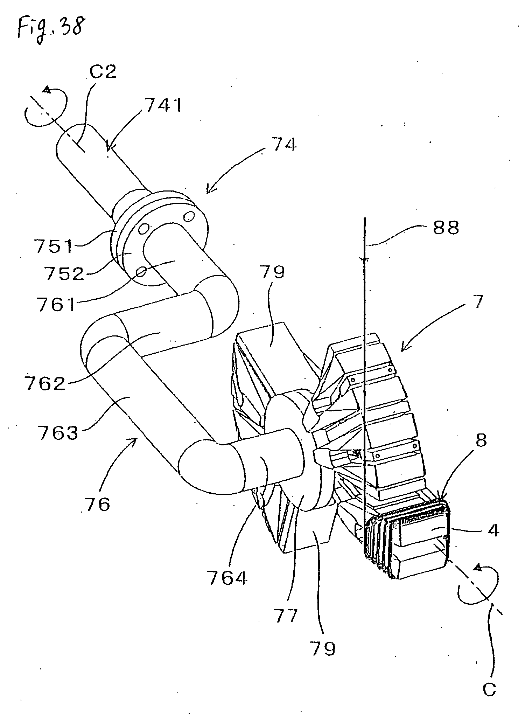

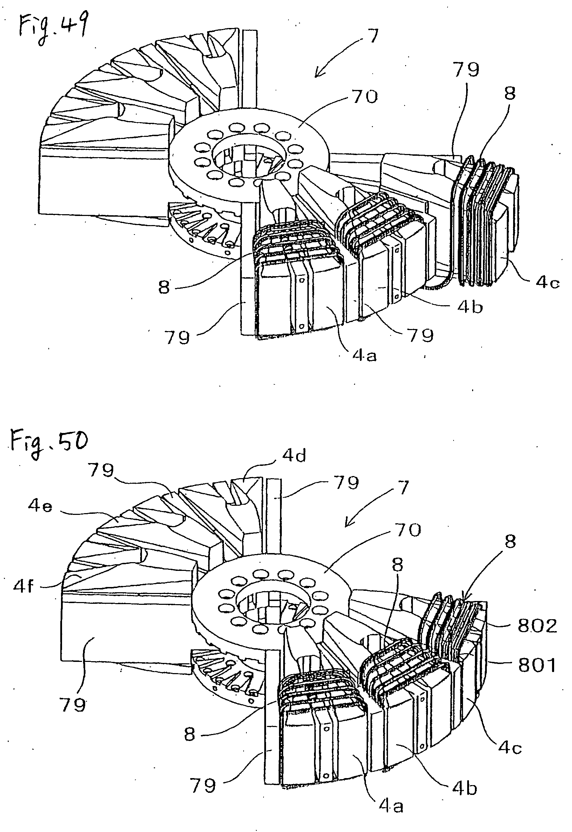

In this embodiment, as shown in Figs. 37 and 38, a winding jig (magazine) 7 and rotating device 74 are used as a coil forming device for forming motor coils composed of three unipolar coils 8 formed by winding wire 88 in a loop formation (see Fig. 50).

As shown in Figs. 37 to 39, the winding jig 7 has a base holder 70 and a plurality of spools 4 disposed on an outer peripheral surface of the base holder 70. Each spool 4 is disposed retractably with respect to the base holder 70, and structured such that any one spool 4 is capable of projecting from the other spools.

As shown in Figs. 37 and 38, the rotating device 74 is structured so as to rotate the entire winding jig 7 around an axis C in the advancing and retracting direction of the protruding spool 4.

Hereinafter, a coil forming apparatus of this embodiment will be described in further detail.

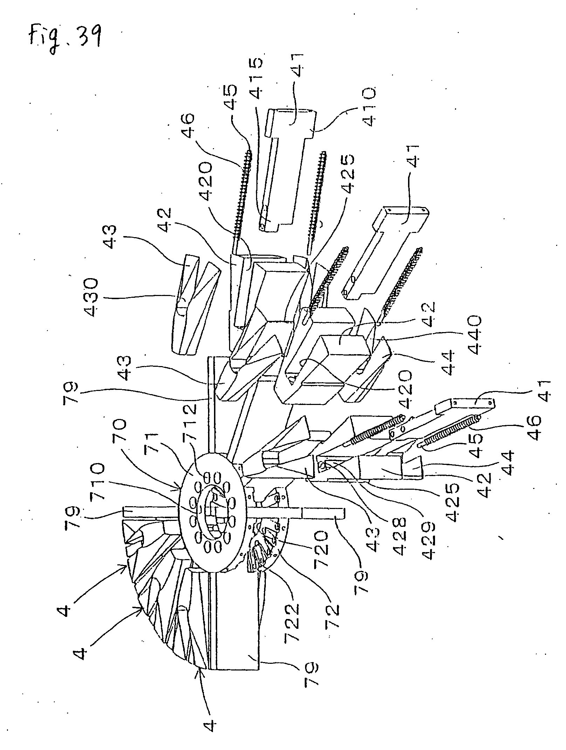

As shown in Fig. 39, in the winding jig 7, the base holder 70 has a disc shape. Namely, the base plate 70 includes a pair of upper and lower ring-shaped plates 71 and 72, and each ring-shaped plate has respective central through holes 710 and 720 and a plurality of positioning holes 712 and 722 in a periphery thereof. The central through holes 710 and 720 and the positioning holes 712 and 722 in a periphery thereof are used for determining an engagement position with the rotating device 74, which will be described later.

In addition, the pair of upper and lower ring-shaped plates 71 and 72 are joined through separation plates 79 disposed along directions extending radially from the center thereof. In this embodiment, four separation plates 79 are disposed at pitch with a 30-degree inner angle, and the four separation plates 79 are further disposed at a pitch with a 30-degree inner angle in opposing positions. Then, respective spools 4 are disposed in a space with an approximately 30-degree inner angle provided between adjacent separation plates 79. In this embodiment, three spools 4 are disposed adjacent to each other at opposing positions so that a total of six spools 4 are provided.

As shown in Fig. 39, the winding jig 7 of this embodiment is structured such that the separation plates 9 and the spools 4 can be further disposed at open positions on the outer peripheral surface of the disc-shaped base holder 70, so that a maximum of 12 spools 4 can be provided.

In addition, as shown in Fig. 39, the spools 4 are disposed retractably along the axis extending radially from the center point of the base holder 70. Further, each spool 4 has a fan-like shape expanding in width along the axis.

Namely, if surfaces parallel to the ring-shaped plates 71 and 72 of the base holder 70 are assumed to be respective front and rear surface sides, as shown in Fig. 39, each spool 4 is substantially fan-like in its entire shape as viewed from a front surface and rear surface thereof, and has a frame main body portion 42 providing a notch portion 420 in the center portion thereof. Further, step portions 425 are provided on both sides of the frame main body portion 42, such that when the unipolar coil 8 is formed, positioning thereof is carried out.

Further, forming blocks 43 and 44 are disposed detachably on the front and rear surface sides of the frame main body portion 42 in order to arrange the shape of the wound unipolar coil. These forming blocks 43 and 44 are also substantially fan-shaped and have notch portions 430 and 440 in the center portion thereof. The forming blocks 43 and 44 are fixed to the frame main body portion 42 by driving screws (not shown).

In addition, as shown in Fig. 39, the forming blocks 43 and 44 of this embodiment are formed thicker as the outer periphery becomes the inner periphery, such that the height of the formed unipolar coil increases as it approaches the inner periphery.

In addition, as shown in Fig. 39, the frame main body portion 42 has a rectangular through hole 429 in the axial direction from the notch portion 420 to the base holder 70. Further, rod holes 428, which are circular through holes, are provided above and below the through hole 429. The spool 4 is disposed retractably on the base holder 70 by fixing a guide plate 41 via the through hole 429 onto the base holder 70.

More specifically, as shown in Fig. 39, the guide plate 41 is composed of a base end portion 415 fixed to the base holder 70, and an end portion 410, the vertical dimension of which is increased in a substantial T-shape for restricting the advancing position of the spool 4. Then, the base end portion 415 of this guide plate 41 passes through the through hole 429 that opens to the bottom portion of the notch portion 420 of the frame main body portion 42, and rods 45 mounted with springs 46 pass through the rod holes 428 provided above and below the through hole 429 of the frame main body portion 42. The base end portion 415 of the guide plate 41 is held and fixed between the pair of upper and lower ring-shaped plates 71 and 72 of the base holder 70, and the ends of two rods 45 are fixed to the ring-shaped plates 71 and 72 ,while the other ends are fixed to the end portion 410 of the guide plate 41. Consequently, the spool 4 is fixed retractably with respect to the base holder 70.

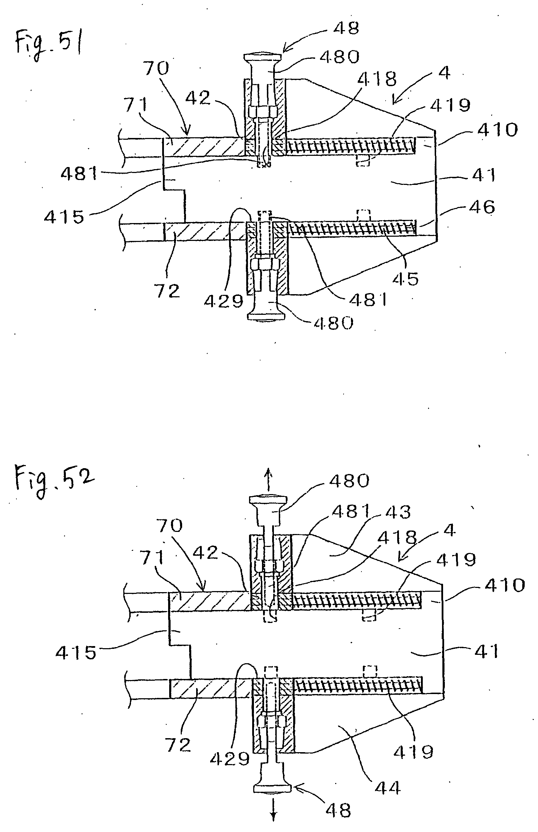

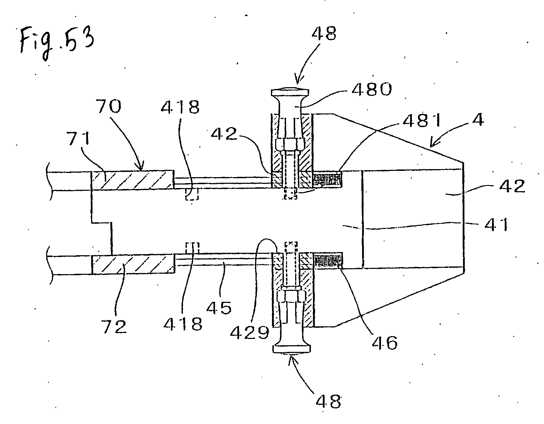

As shown in Figs. 51 to 53, the spool 4 has positioning pins 48 above and below, which can advance and retract a pin end portion 481 by plucking and operating a pin head portion 480. Further, the guide plate 41 has pin holes 418 and 419 capable of engaging the pin end portion 481. As shown in Fig. 51, in a state where the pin end portion 481 of the positioning pin 48 is engaged with the pin hole 418, the spool 4 maintains a retracted state near the base holder 70. Also, when advancing the spool 4, the positioning pin 48 is retracted so as to release the engaged state between the pin end portion 481 and the pin hole 418 ,and the spool 4 is advanced resisting the spring 46. As shown in Fig. 53, the positioning pin 48 is then advanced again to engage the pin end portion 481 with the pin hole 419. Consequently, the spool 4 is structured such that it advances in the axial direction thereof, and is fixed at a position away from the base holder 70.

The separation plates 79 provided extending from the outer peripheral surface of the base holder 70 exist on both sides of each spool 4 disposed as described above. Between the separation plate 79 and the spool 4, a predetermined gap is maintained that functions as the coil holding groove, which will be described later.

In the winding jig 7 of this embodiment, a visible outline formed by the ends of the spools 4 when all spools 4 are retracted is circular around the center point of the base holder 70. Namely, the winding jig 7 of this embodiment is a shape capable of being disposed with each spool 4 opposing the inner peripheral surface of the stator core, which will be described later.

Next, as shown in Figs. 37 and 38, the rotating device 74 of this embodiment includes a straight portion 741 provided extending from a drive shaft (not shown), and a bent portion 76 connected to the straight portion 741 via flanges 751 and 752, in which an end of the bent portion 76 has a connecting flange 77 for connecting with the winding jig 7.

As shown in the same figure, the bent portion 76 includes a first part 761 extending coaxially with the straight portion 741, a second part 762 provided extending and bent 90 degrees from the first part, a third part 763 bent a further 90 degrees from the second part 762 and parallel to the straight portion 741, and a fourth part 764 bent a further 90 degrees from the third part 763. The connecting flange 77 is disposed at an end of the fourth part 764.

As shown in Figs. 37 and 38, the connecting flange 77 is adjusted in position such that when it is connected to the base holder 70 of the winding jig 7, the center points in the direction of thickness and the radial direction of the base holder 70 are located on the axis of the straight portion 741.

Further, the fixing position of the winding jig 7 in its circumferential direction and the connecting flange 77 are structured appropriately adjustable at a position in which the axis C of the spool 4 coincides with a rotation center C2 of the straight portion 741 of the rotating device 74.

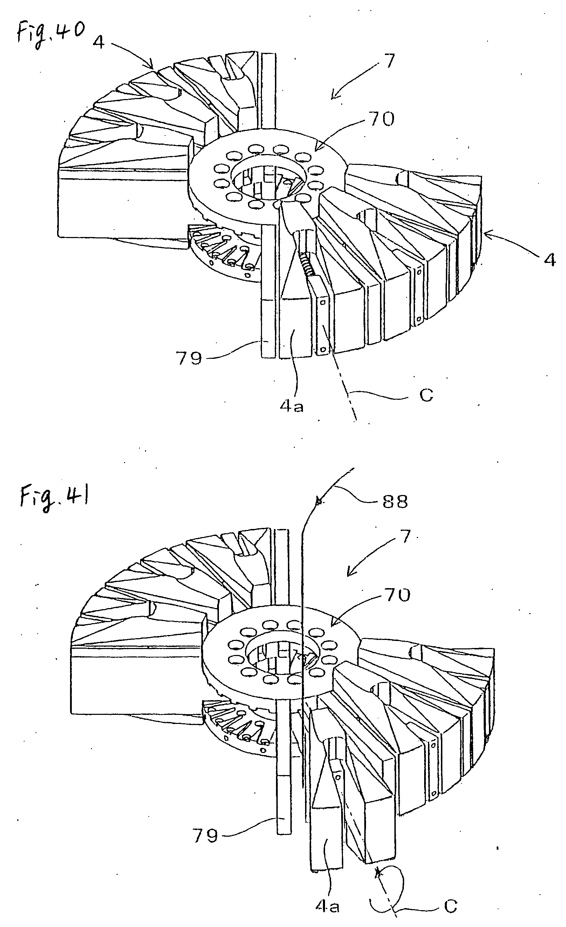

Next, a method for forming a motor coil composed of unipolar coils 8 aligned in a row by a coil forming apparatus having the winding jig 7 and the rotating device 74 will be described with reference to Figs. 40 to 50. In these figures, a description of the rotating device 74 is omitted.

As shown in Fig. 40, in a state with all spools 4 retracted in the winding jig 7, the winding jig 7 is fixed to the rotating device 74, and the rotation center C2 thereof (see Figs. 37 and 38) is made to coincide with the axis C of a first spool 4a.

Next, a spool projection step for advancing the first spool 4a such that it protrudes from other spools 4 is carried out as shown in Fig. 41. At this time, the positioning pin 48 (Figs. 51 to 53) fixing the spool 4a at its retracted position is released so as to allow the spool 4a to advance resisting the spring 46, and it is then fixed again at its advanced position with the positioning pin 48.

As shown in Fig. 41, the wire 88 is supplied in a single direction from above, and an end thereof is fixed to the winding jig 7. As a fixing method, it may be fixed at a specific position with a special fixing device, or it may be tied up at an arbitrary position of the spool 7. In this embodiment, the latter method was adopted.

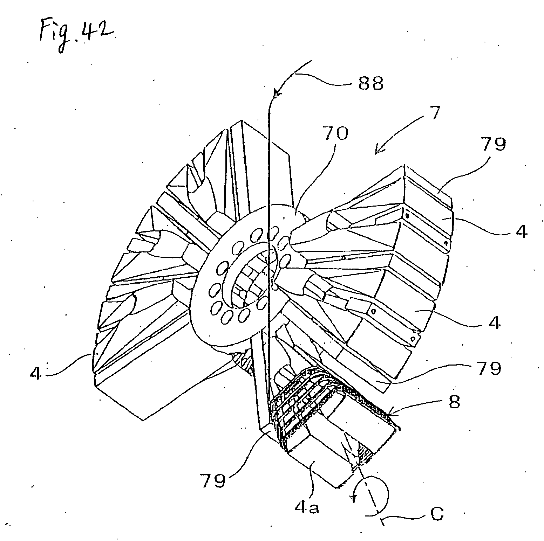

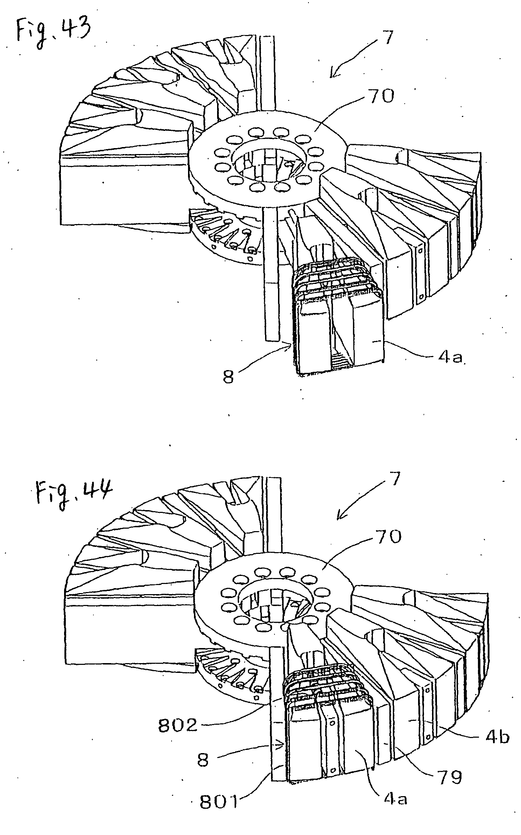

Next, as shown in Figs. 41 and 42, the winding step is executed by supplying the wire 88 to the projected spool 4a from a single direction, and driving the rotation device 74 to rotate the entire winding jig 7 around the axis C of the spool 4a. Consequently, as shown in Fig. 43, the wire 88 wound around the projected spool 4a completes the formation of the first unipolar coil 8.

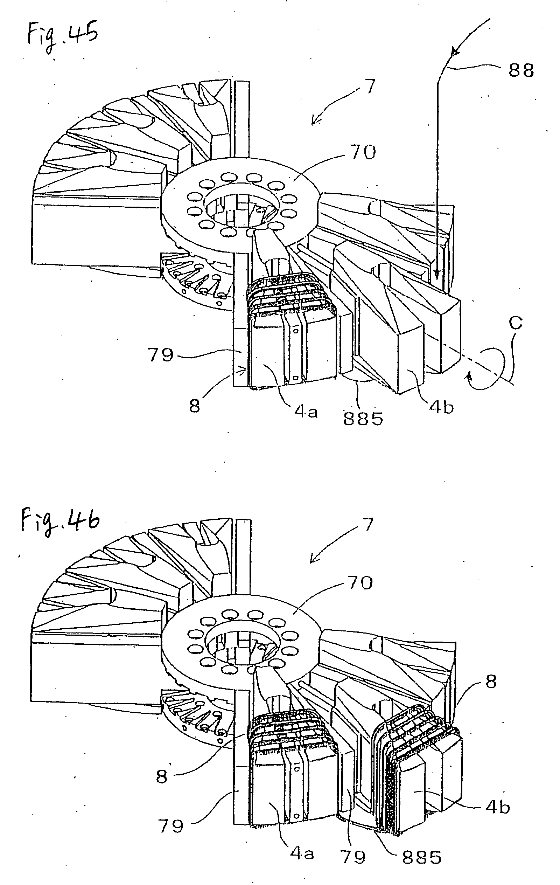

Next, as shown in Fig. 44, a spool retraction step for retracting the first spool 4a on which the unipolar coil 8 is formed is executed. At this time, the spool 4a is fixed at its retracted position by again operating the positioning pin 48 (Figs. 51 to 53).

As shown in the same figure, when the unipolar coil 8 is formed around the spool 4a, the coil end portions 802 located above and below the loop thereof are exposed on the front and rear of the spool 4, while the coil inserting portions 801 located on the right and left are accommodated between the separation plate 79 and the spool 4.

Next, as shown in Fig. 45, a second spool 4b adjacent to the first spool 4a that formed the unipolar coil 8 is advanced along the axis C, so that it is projected outward from the other spool.4, and fixed at an advanced position as described above.

In addition, before or after this spool projection step, the engagement position between the winding jig 7 and the rotating device 74 is changed so that the rotation center of the rotating device 74 is made to coincide with the axis center of the second spool 4b.

Further, as shown in the same figure, a crossover wire 885 continuous from the unipolar coil 8 held by the first spool 4a passes below the second spool 4b, and the wire 88 continuous from this is supplied from a single direction above identical to the previous description.

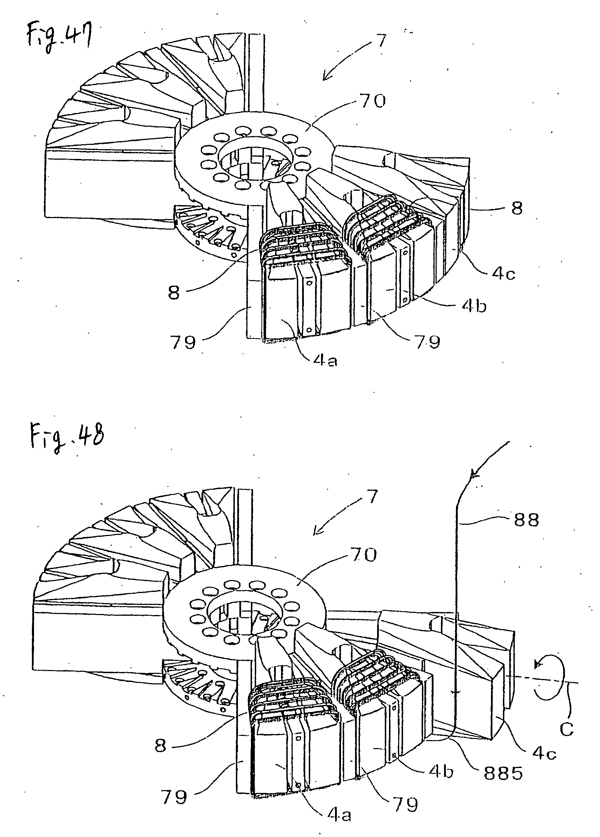

Next, as shown in Figs. 45 and 46, the winding step of supplying the wire 88 to the projected spool 4b from a single direction, and rotating the entire winding jig 7 around the axis C of the spool 4b is executed. The rotation direction at this time is the reverse of the direction in the case of the first spool 4a. Consequently, as shown in Fig. 47, the wire 88 is wound around the projected spool 4b, so that formation of a second unipolar coil 8, the winding direction of which is opposite to the first unipolar coil 8, is completed.

Next, as shown in Fig. 47, the second spool 4b that formed the unipolar coil 8 is retracted and fixed at its retracted position as described above.

As shown in the same figure, when the second unipolar coil 8 is formed around the spool 4b, the coil end portions 802 located above and below the loop thereof are exposed on the front and rear of the spool 4, and the coil inserting portions 801 located on the right and left are accommodated in a gap between the separation plate 79 and the spool 4.

Next, as shown in Fig. 48, a third spool 4c adjacent to the second spool 4b is advanced along the axis C so that it is projected outward from the other spools 4, and fixed at an advanced position. Further, in this case as well, by changing the engagement position between the winding jig 7 and the rotating device 74 before or after the spool projection step, the rotation center C2 (Figs. 37 and 38) of the rotating device 74 is made to coincide with the axis C of the third spool 4c.

In addition, as shown in the same figure, the wire 88 continuous from the crossover wire 885 extending from the unipolar coil 8 held by the second spool 4b is supplied from a single direction above identical to the above description.

Next, the winding step is carried out by supplying the wire 88 to the projected spool 4c from a single direction as shown in Figs. 48 and 49, and rotating the entire winding jig 7 around the axis C of the spool 4c. The rotation direction at this time is the reverse of the direction in the case of the second spool 4c. Consequently, as shown in Fig. 49, the wire 88 is wound around the projected spool 4c, so that formation of a third unipolar coil 8, the winding direction of which is opposite to the second unipolar coil 8, is completed.

Next, the third spool 4c that formed the unipolar coil 8 is retracted as shown in Fig. 50, and is retracted and fixed at its retracted position as described above.

As shown in the same figure, the coil inserting portion 801 of the third unipolar coil 8 formed around the spool 4c is accommodated in a gap between the separation plate 79 and the spool 4.

Consequently, the coil is completed by combining the three unipolar coils 8 together such that their winding directions are alternately reversed.

Next, as shown in Fig. 50, for three spools 4d to 3f opposing the three spools 4a to 3c in which the aforementioned coil is formed, another coil can be completed by combining three unipolar coils 8 together with their winding directions alternately reversed according to the same procedure as described above.

Therefore, in the coil forming method of this embodiment, the winding jig 7 having the above-described structure including the base holder 70 and the spool 4, and the rotating device 74 are employed. Further, as described above, the spool projection step, the winding step, and the spool retraction step are carried out in succession for each spool.

Here, the winding step is carried out by rotating the entire winding jig around the axis C of the projected spool 4. Thus, as described above, the wire 88 can be supplied from a single direction, and the unipolar coil 8 can be formed on the spool 4 without twisting the wire 88.

The winding step is carried out after the spool projection step and the spool retraction step is carried out after the winding step. Namely, when changing the spool 4 undergoing the winding step, it can be changed by advancing or retracting the spool 4 in the spool projection step or the spool retraction step, thereby eliminating the need to specially provide a space between adjacent spools 4 for supplying wire. Moreover, the length of the crossover wire 885 obtained between the unipolar coils 8 can be kept sufficiently short.

Further, in this embodiment, each spool 4 of the winding jig 7 has a substantially fan-like shape as described above, and the forming blocks 43 and 44 are disposed on the front and rear surface sides thereof. The forming blocks 43 and 44, as described above, have increasing thickness in the direction from outward to inward. Thus, in the unipolar coil 8 wound around the spool 4, the shape of a plurality of wire loops constituting this unipolar coil changes along the axis C of the spool 4.

Namely, the width of the wire loops constituting the unipolar coil 8 increases along the fan-shaped spool 4 as it proceeds outward, and the height thereof decreases along the shape of the forming blocks 43 and 44. Therefore, as described above, the arrangement of the coil end portion 802 when the coil is mounted on the stator core can be optimized. A structure in which the width increases from inside to outside in the radial direction, while the height in the axial direction decreases from inside to outside in the radial direction, prevents respective wire (wound wire) that constitutes the unipolar coil 8 from being displaced when the wire 88 is wound.

In addition, when all the spools 4 are in a retracted state in the winding jig 7 of this embodiment, a visible outline formed by the ends of the spools 4 is circular, and each spool 4 can be positioned opposing the inner peripheral surface of the stator core, which will be described later.

Further, the separation plates 79 provided extending from the outer peripheral surface of the base holder 70 exist on both sides of each spool 4. A gap between the separation plate 79 and the spool 4 functions as the coil holding groove. As shown in the second embodiment described later, the mounting operation for each unipolar coil 8 onto the stator core with linear movement along this coil holding groove can be achieved.

Next, an example of a method for directly inserting the coil formed with the coil forming apparatus into the stator core from the winding jig 7 in the embodiment will be described.

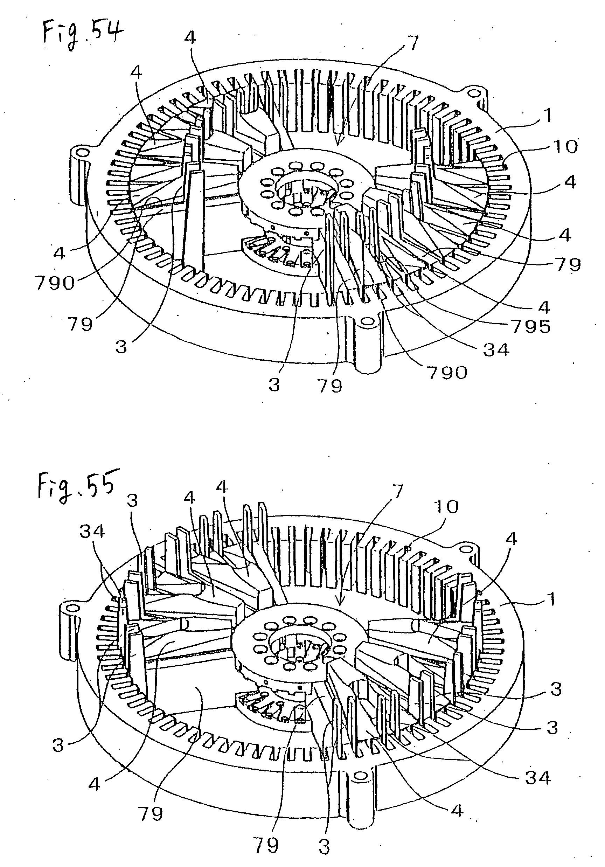

In this embodiment, as shown in Figs. 54 and 55, the coil (see Fig. 50) is inserted into and disposed on the slots 10 provided in the inner peripheral surface of the ring-shaped stator core 1. Moreover, in this embodiment, representation of the coil (unipolar coil 8) is omitted in order to clarify the motion of the insertion blades 3 and the like, which will be described later.

The motor constituted with the stator core 1 is a 3-phase DC brushless motor. The stator core 1 of this embodiment is also produced by laminating ring-shaped electromagnetic steel plates, and as shown in Figs. 54 and 55, includes the slots 10 into which the coil is inserted on an inner peripheral surface thereof.

In this embodiment, the stator core 1 is provided with 72 slots 10 for disposing a total of 36 unipolar coils 8. Every 12 unipolar coils 8 is of a single phase. As described above, in this embodiment, coils constituted of a combination of three unipolar coils 8 are produced in pair by the winding jig 7, and these are simultaneously mounted on the stator core 1. Executing this operation six times mounts all necessary unipolar coils 8 onto the stator core 1.

This operation will be described in further detail. First, as shown in Fig. 54, the winding jig 7 is disposed in an inner portion of the stator core 1 such that a coil holding groove 790 formed between the spool 4 and the separation plate 79 on the winding jig 7 opposes the slot 10 in the stator core 1.

Further, as shown in Fig. 54, the insertion blade 3 is inserted into the coil holding groove 790 of the winding jig 7. Also, the notch portion 420 provided in the frame main body portion 42 of the spool 4 of the winding jig 7, and the notch portions 430 and 440 (see Fig. 39) provided in the upper and lower forming blocks 43 and 44 serve as a preliminary forming groove 795 into which the preliminary formation blade 34 is inserted.

As shown in Fig. 55, the insertion blade 3 is advanced in a direction from the center to the outer periphery of the coil holding groove 790, while the preliminary formation blade 34 is advanced in a direction from the center to the outer periphery of the preliminary forming groove 795. Consequently, the unipolar coil 8 is pushed by the insertion blade 3, so that it is moved substantially linearly from the coil holding groove 790 into the slot 10 in the stator core 1. Further, the above and below coil end portions 802 (Fig. 50) protruding from the stator core 1 of the unipolar coil 8 are subjected to preliminary formation in which they are pressed by the preliminary formation blades 34 to be deformed outward.

Such advancing actions of the insertion blade 3 and the preliminary formation blade 34 are simultaneously carried out for six unipolar coils 8, so that the six unipolar coils 8 are inserted into the slots 10 in the stator core 1 at the same time.

Next, the second preliminary formation is carried out with the pair of upper and lower formers 66 (see Fig. 12) identical to the first embodiment. As described above, the former 66 has a ring shape, and a forming face 660 for arranging the coil into a desired shape provided on a side opposing the stator core 1. In addition, each former 66 is provided with a notch portion 665 for preventing interference between the insertion blade 3 and the preliminary formation blade 34. The former can be pressed against the stator core 1, while maintaining the insertion blade 3 and the preliminary formation blade 34 in an advanced state.

The pair of upper and lower formers 66 having such a structure are respectively advanced to the stator core 1 from above and below, and pressed against the stator core 1. Consequently, as described above, the second preliminary formation is carried out such that the coil end portions 802 protruding from above and below the stator core 1 of the six unipolar coils 8 disposed on the stator core 1 falls toward the stator core 1.

Next, in this embodiment, a pair of coils constituted of a combination of three new unipolar coils 8 are formed on the winding jig 7 with the above-described coil forming apparatus. As described above, moving of the coil directly to the stator core 1 from the winding jig 7, in addition to the preliminary formation and the second preliminary formation are carried out. By repeating this operation six times, a total of 36 unipolar coils 8 are mounted on the stator core 1. The formation by the formers, which is carried out as a final second preliminary formation, is executed on all 36 unipolar coils, which is a main formation step for arranging the entire coil.

Consequently, a total of 36 unipolar coils 8 are inserted into the stator core 1.

In this embodiment, the formation of the six unipolar coils to the second preliminary formation is carried out as a sequential operation, and this operation is repeated six times; however, a plurality of winding jigs 7 may be employed to raise efficiency. Further, the process can be streamlined by increasing the quantity of the spools 4 from 6 to 12, and moving the 12 unipolar coils 8 to the stator core 1 all at once.

As described above, a so-called linear inserting process of linearly moving the coil easily and stably can be executed by using the winding jig 7 and the insertion blade 3 in this embodiment as well. Namely, the unipolar coil 8 can be linearly inserted into the slot 10 without changing the orientation of the unipolar coil 8. Therefore, the length of the coil in the vertical direction does not have to be made longer than required.

Further, in this embodiment, as described above, the coil can be directly moved from the spool 4 to the stator core 1 after forming the coil. Then, after forming the coil, the coil can be mounted on the stator core extremely effectively without necessitating transfer of the coil to another coil transfer device from the spool. As already explained above, this is due to the excellent structure of the winding jig 7 described above.

Since the coil can be directly inserted from the winding jig 7 into the stator core 1, the coil can be moved easily even if the length of the crossover wire for connecting the unipolar coils 8 to each other is short.

### [FIG. 11]

- 1: STATOR CORE
- 2: MAGAZINE
- 3: INSERTION BLADE
- 8: COIL
- 10: SLOT
- 20: COIL HOLDING MECHANISM

## Claims

1. A motor manufacturing method having a stator formed by inserting a coil into a slot provided in an inner peripheral surface of a ring-shaped motor core, the motor manufacturing method **characterized by** comprising:
a coil formation step for forming a unipolar coil including coil inserting portions inserted into the slots in two places, and coil end portions disposed in an outer portion of the motor core in two places so as to connect with the coil inserting portions; and
a coil insertion step for holding the unipolar coil with a coil holding mechanism during or after the coil formation step, disposing the unipolar coil so as to be substantially parallel to the axial direction of the motor core, with the coil inserting portions opposing an inner peripheral opening portion in the respective slots, and
moving the unipolar coil substantially linearly toward the motor core so as to detach from the coil holding mechanism to insert the coil inserting portions of the unipolar coil into the slots.

2. The motor manufacturing method according to claim 1, **characterized in that** moving of the unipolar coil in the coil insertion step is executed in a state where an angle formed between the coil inserting portion and an axial direction of the motor core is maintained at 5 degrees or less.

3. The motor manufacturing method according to claim 1, **characterized in that** only the unipolar coil is inserted into the slot in the motor core in the coil insertion step.

4. A motor manufacturing method having a stator formed by inserting a coil into a slot provided in an inner peripheral surface of a ring-shaped motor core, the motor manufacturing method **characterized by** comprising:
a coil formation step for forming a unipolar coil including coil inserting portions inserted into the slots in two places, and coil end portions disposed in an outer portion of the motor core in two places so as to connect with the coil inserting portions; and
a coil insertion step for disposing the unipolar coil so as to be substantially parallel to the axial direction of the motor core, with the coil inserting portions opposing an inner peripheral opening portion of the respective slots, and moving the unipolar coil substantially linearly toward the motor core by applying respective insertion pressure to at least two the coil inserting portions of the unipolar coil for inserting the coil inserting portions of the unipolar coil into the slots.

5. A motor manufacturing method having a stator formed by inserting a coil into a slot provided in an inner peripheral surface of a ring-shaped motor core, the motor manufacturing method **characterized by** comprising:
a coil formation step for forming a unipolar coil including coil inserting portions inserted into the slots in two places, and coil end portions disposed in an outer portion of the motor core in two places so as to connect with the coil inserting portions; and
a coil insertion step for disposing the unipolar coil so as to be substantially parallel to the axial direction of the motor core, with the coil inserting portions opposing an inner peripheral opening portion of the respective slots, and moving the unipolar coil substantially linearly toward the motor core by applying respective insertion pressure to at least two the coil end portions of the unipolar coil for inserting the coil inserting portions of the unipolar coil into the slots.

6. A motor manufacturing method having a stator formed by inserting a coil into a slot provided in an inner peripheral surface of a ring-shaped motor core, the motor manufacturing method **characterized by** comprising:
a coil formation step for forming a unipolar coil including coil inserting portions inserted into the slots in two places, and coil end portions disposed in an outer portion of the motor core in two places so as to connect with the coil inserting portions; and
a coil insertion step for disposing the unipolar coil so as to be substantially parallel to the axial direction of the motor core, with the coil inserting portions opposing an inner peripheral opening portion of the respective slots, and moving the unipolar coil substantially linearly toward the motor core by applying respective insertion pressure to a plurality of positions substantially symmetrical with respect to a winding center point of each the unipolar coil for inserting the coil inserting portions of the unipolar coil into the slots.

7. The motor manufacturing method according to any one of claims 4 to 6, **characterized in that** the coil insertion step is executed by holding the unipolar coil with the coil holding mechanism during or after the coil formation step, disposing the unipolar coil so as to be substantially parallel to the axial direction of the motor core, with the coil inserting portions opposing an inner peripheral opening portion of the respective slots, and moving the unipolar coil substantially linearly toward the motor core so as to detach from the coil holding mechanism.

8. The motor manufacturing method according to any one of claims 1 to 7, **characterized in that** the motor is a distribution winding type motor having the ring-shaped motor core in which a plurality of the slots provided in an inner peripheral surface, and coil groups of plural phases, wherein the coil group of each phase is structured from a plurality of unipolar coils structuring a single pole, each respective unipolar coil is inserted into the motor core so as to straddle two the respective slots, and unipolar coils belonging to coil groups of different phases, mutually overlap on a portion of coil end portions in a state mounted in the motor core.

9. The motor manufacturing method according to any one of claims 1 to 8, **characterized in that** the motor core is a stator core.

10. The motor manufacturing method according to any one of claims 1 to 9, **characterized in that** the coil insertion step uses a magazine having a disc shape capable of being disposed on an inner side of an inner peripheral surface of the motor core, which is provided with coil holding grooves positioned opposing the slot of the motor core on an outer peripheral surface thereof;
inserts the coil inserting portions of a plurality of the unipolar coils into the coil holding grooves so the coils are held by the magazine;
disposes the magazine in an inner portion of the motor core such that the coil holding groove of the magazine opposes the slot of the motor core; and
moves all the unipolar coils from the coil holding grooves to the slots in the motor core by contacting the coil inserting mechanism with all the unipolar coils on the magazine, and advancing a contact portion thereof in a direction from a center of the magazine toward an outer periphery.

11. The motor manufacturing method according to claim 10, **characterized in that** the coil inserting mechanism further comprises insertion blades capable of being inserted into the coil holding grooves on the magazine, and the coil inserting portion is moved from the coil holding groove to the slot in the motor core by inserting the insertion blade into the coil holding groove and advancing the insertion blade in a direction from the center toward the outer periphery.

12. The motor manufacturing method according to claim 10, **characterized in that** the coil inserting mechanism further comprises a pair of divided insertion blades capable of being inserted from front and rear surface sides of the magazine into the respective coil holding grooves, and the pair of divided insertion blades are inserted into the respective coil holding grooves from front and rear surface sides of the magazine to make contact with the coil inserting portion, wherein the coil inserting portion is moved from the coil holding groove into the slots in the motor core by advancing a contact portion thereof in a direction from the center to the outer periphery.

13. The motor manufacturing method according to claim 10, **characterized in that** the coil inserting mechanism further comprises a pair of divided insertion hooks separated on front and rear surface sides of the magazine to make contact with the coil end portions projected to the front and rear surface sides of the magazine, wherein the coil inserting portion is moved from the coil holding groove into the slots in the motor core by advancing the pair of divided insertion hooks in a direction from the center of the magazine toward the outer periphery.

14. The motor manufacturing method according to claim 10, **characterized in that** a preliminary formation step for presses and deforming the coil end portion is executed by advancing a preliminary forming mechanism disposed between adjacent coil holding grooves in a direction from the center of the magazine toward the outer periphery, at the same time or after the coil inserting portion is moved from the coil holding groove into the slots.

15. The motor manufacturing method according to claim 14, **characterized in that** the preliminary forming groove is provided in the magazine aligned with the coil holding groove, a preliminary formation blade capable of being inserted into the preliminary forming groove is used as the preliminary forming mechanism, and the preliminary formation step is executed by inserting the preliminary formation blade into the preliminary forming groove and advancing the preliminary formation blade in a direction from the center toward the outer periphery.

16. The motor manufacturing method according to claim 14, **characterized in that** the preliminary forming mechanism further comprises a pair of divided preliminary formation blades separated on the front and rear surface sides of the magazine, and the preliminary formation step is executed by advancing the pair of divided preliminary formation blades in a direction from the center of the magazine to the outer periphery on the front and rear surface sides of the magazine.

17. The motor manufacturing method according to claim 16, **characterized in that** the coil inserting mechanism further comprises a pair of divided insertion blades separated on the front and rear surface sides of the magazine, wherein the divided insertion blade and the divided preliminary formation blade are structured so as to interlock.

18. The motor manufacturing method according to claim 14, **characterized in that** after the coil insertion step and the preliminary formation step are repeated multiple times, a main formation step for forming the coil end portions by pressing formers with a forming face for arranging the coil end portion to a desired shape against the motor core is executed.

19. The motor manufacturing method according to claim 18, **characterized in that** the former is provided with a notch portion for preventing interference between the coil inserting mechanism and the preliminary forming mechanism, and the former is pressed against the motor core with the coil inserting mechanism and the preliminary forming mechanism maintaining an advanced state.

20. The motor manufacturing method according to any one of claims 1 to 19 of the invention, **characterized in that** the motor is a 3-phase DC brushless motor, and unipolar coils of a phase are simultaneously inserted into the slots in the motor core in the coil insertion step.

21. The motor manufacturing method according to claim 10, **characterized in that** the coil formation step uses a winding jig having a base holder and a plurality of spools provided radially on an outer peripheral surface of the base holder, in which spools are disposed retractably with respect to the base holder, and includes
a spool projection step for advancing such that one spool among the plurality of spools projects more than other spools;
a winding step for supplying wire to the projected spool from a single direction, and forms a unipolar coil by rotating the entire winding jig around an axis of the spool to wind the wire around the spool; and
a spool retraction step for retracting the spool on which the unipolar coil is formed, wherein
the spool projection step, the winding step, and the spool retraction step are sequentially executed repeatedly for adjacent spools, with a rotation direction of the winding jig is sequentially reversed in the winding step; and
the winding jig is used as the magazine in the coil insertion step, and the winding jig holding the coil is disposed in an inner portion of the motor core, with each unipolar coil moved directly from the spool into the slot in the motor core.

22. The motor manufacturing method according to claim 21, **characterized in that** the base holder of the winding jig is disc-shaped, and the plurality of spools are disposed retractably along axes extending radially from a center point of the base holder.

23. The motor manufacturing method according to claim 21, **characterized in that** each spool in the winding jig has a fan shape, the width of which expands along an axis.

24. The motor manufacturing method according to claim 21, **characterized in that** each spool in the winding jig has a detachable forming block for arranging the shape of the wound unipolar coil.

25. The motor manufacturing method according to claim 21, **characterized in that** a visible outline of the winding jig formed by ends of the spools in a state with all spools retracted is circular with a center as the center point of the base holder.

26. The motor manufacturing method according to claim 21, **characterized in that** a separation plate provided extending from an outer peripheral surface of the base holder is disposed on both sides of each spool, and a predetermined gap is maintained between the separation plate and the spool.

27. A coil insertion apparatus using a coil holding mechanism provided with a coil holding groove at a position opposing a motor core, inserting a coil inserting portion of a unipolar coil inserted into the coil holding groove so the coil holding mechanism holds the unipolar coil, in order to insert the unipolar coil into a slot in the motor core from the coil holding mechanism, in a state where the motor core that is ring-shaped is disposed on an outer periphery side of the coil holding mechanism, the coil insertion apparatus **characterized by** comprising:
a base holding the coil holding mechanism and the motor core;
an insertion blade capable of being inserted into the coil holding groove in the coil holding mechanism; and
a blade driving mechanism for advancing and retracting the insertion blade along the coil holding groove.

28. The coil insertion apparatus according to claim 27, **characterized in that** the coil holding mechanism is provided with one or a plurality of preliminary forming grooves for holding one of the unipolar coils between a pair of coil holding grooves, the coil insertion apparatus has one or a plurality of preliminary formation blades capable of being inserted into the preliminary forming groove between a pair of insertion blades corresponding to the pair of coil holding grooves; and
the blade driving mechanism is structured so as to advance and retract the preliminary formation blade interlockingly with the insertion blade along the preliminary forming groove.

29. The coil insertion apparatus according to claim 28, **characterized in that** the coil insertion apparatus further includes a first arm and a second arm having a swing supporting point at bottom ends, and is structured wherein
the insertion blade is connected to a top end of the first arm, and the preliminary formation blade is connected to a top end of the second arm;
the first arm and the second arm are respectively provided with a first elongated hole portion and a second elongated hole portion with at least a partial inclination;
a hoisting member lifted up and down by an actuator is disposed on an inner side of the first arm and the second arm, and the hoisting member is provided with a first pin and a second pin slidably engaging the first elongated hole portion and the second elongated hole portion; and
the hoisting member is lifted up and down by the actuator, which changes engagement positions between the first pin and the second pin, and the first elongated hole portion and the second elongated hole portion, thereby swinging the first arm and the second arm such that the insertion blade and the preliminary formation blade are advanced and retracted by this swinging.
